(19) Europäisches Patentamt
European Patent Office
Office européen des brevets

(11) **EP 4 015 065 B1**

(12) **EUROPÄISCHE PATENTSCHRIFT**

(45) Veröffentlichungstag und Bekanntmachung des Hinweises auf die Patenterteilung:
**26.02.2025  Patentblatt 2025/09**

(21) Anmeldenummer: **20214154.5**

(22) Anmeldetag: **15.12.2020**

(51) Internationale Patentklassifikation (IPC):
**B01D 53/94** *(2006.01)*  **B01J 23/63** *(2006.01)*
**B01J 35/00** *(2024.01)*  **F01N 3/035** *(2006.01)*
**B01J 37/02** *(2006.01)*  **F01N 3/022** *(2006.01)*

(52) Gemeinsame Patentklassifikation (CPC):
**B01D 53/944; B01J 23/63; B01J 35/19;**
**B01J 37/0232; F01N 3/0222; F01N 3/035;**
B01D 2255/1023; B01D 2255/1025;
B01D 2255/2061; B01D 2255/2063;
B01D 2255/2066; B01D 2255/407;
B01D 2255/9155; F01N 2330/06; F01N 2330/30;
(Forts.)

(54) **KATALYTISCH AKTIVER PARTIKELFILTER MIT HOHER FILTRATIONSEFFIZIENZ**
CATALYTICALLY ACTIVE PARTICLE FILTER WITH HIGH FILTRATION EFFICIENCY
FILTRE À PARTICULES CATALYTIQUEMENT ACTIF À EFFICACITÉ DE FILTRATION ÉLEVÉE

(84) Benannte Vertragsstaaten:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Veröffentlichungstag der Anmeldung:
**22.06.2022  Patentblatt 2022/25**

(73) Patentinhaber: **Umicore AG & Co. KG**
**63457 Hanau-Wolfgang (DE)**

(72) Erfinder:
• **SCHOENHABER, Jan**
  **64287 Darmstadt (DE)**
• **KUCEROVA, Gabriela**
  **89250 Senden (DE)**
• **DEIBEL, Naina**
  **64319 Pfungstadt (DE)**
• **GOTTHARDT, Meike Antonia**
  **60385 Frankfurt (DE)**

(56) Entgegenhaltungen:
EP-A1- 2 554 262      EP-A2- 3 574 983
DE-A1- 102018 127 955

(52) Gemeinsame Patentklassifikation (CPC): (Forts.)
F01N 2370/02; F01N 2510/0682; F01N 2510/0684

## Beschreibung

Die vorliegende Erfindung ist auf einen Wandflussfilter, ein Verfahren zu seiner Herstellung und seine Verwendung zur Minderung schädlicher Abgase eines Verbrennungsmotors gerichtet.

Zur Entfernung der Partikelemissionen und Reduzierung der Schadstoffe in Abgasen sind Dieselpartikelfilter bzw. Benzinpartikelfilter mit und ohne zusätzliche katalytisch aktive Beschichtung geeignete Aggregate. Dies sind Wandflusswabenkörper, die als Katalysatorträger, Träger oder Substratmonolithe bezeichnet werden. Zur Erfüllung der gesetzlichen Normen ist es für die aktuellen und zukünftigen Applikationen zur Abgasnachbehandlung von Verbrennungsmotoren aus Kostengründen, aber auch aus Bauraumgründen wünschenswert, Partikelfilter mit anderen katalytisch aktiven Funktionalitäten zu kombinieren. Die katalytisch aktive Beschichtung kann sich dabei auf der Oberfläche bzw. in den diese Oberfläche bildenden Wänden der Kanäle befinden. Die katalytisch aktive Beschichtung wird häufig in einem sogenannten Beschichtungsvorgang in Form einer Suspension auf den Katalysatorträger aufgebracht. Viele derartige Prozesse sind in der Vergangenheit von Autoabgaskatalysatorherstellern veröffentlicht worden, siehe zum Beispiel EP1064094B1, EP2521618B1, WO10015573A2, EP1136462B1, US6478874B1, US4609563A, WO9947260A1, JP5378659B2, EP2415522A1 und JP2014205108A2.

Der Einsatz eines Partikelfilters - ob katalytisch beschichtet oder nicht - führt zu einer im Vergleich zu einem Durchflussträger gleicher Abmessungen merklichen Erhöhung des Abgasgegendrucks und damit zu einer Verringerung des Drehmoments des Motors oder möglicherweise vermehrtem Kraftstoffverbrauch. Um den Abgasgegendruck nicht noch weiter zu erhöhen, werden die Mengen an oxidischen Trägermaterialien für die katalytisch aktiven Edelmetalle des Katalysators bzw. oxidischen Katalysatormaterialien bei einem Filter in der Regel in geringeren Mengen aufgebracht als bei einem Durchflussträger. Dadurch ist die katalytische Wirksamkeit eines katalytisch beschichteten Partikelfilters einem gleich groß dimensionierten Durchflussmonolithen häufig unterlegen.

Es hat schon einige Anstrengungen gegeben, Partikelfilter bereitzustellen, die eine gute katalytische Aktivität durch eine aktive Beschichtung aufweisen und dennoch einen möglichst geringen Abgasgegendruck zeigen. Im Hinblick auf einen niedrigen Abgasgegendruck hat es sich als günstig erwiesen, wenn sich die katalytisch aktive Beschichtung nicht als Schicht auf den Kanalwänden eines porösen Wandflussfilters befindet, sondern die Kanalwände des Filters mit dem katalytisch aktiven Material durchsetzt sind, siehe etwa WO2005016497A1, JPH01-151706 und EP1789190B1. Hierfür wird die Partikelgröße der katalytischen Beschichtung so gewählt, dass die Partikel in die Poren der Wandflussfilter eindringen und dort durch Kalzinieren fixiert werden können. Nachteilig an katalytisch aktiven Filtern mit einer In-Wand-Beschichtung ist, dass die Menge an katalytisch wirksamer Substanz durch das Aufnahmevermögen der porösen Wand begrenzt ist.

Es hat sich gezeigt, dass durch Aufbringen der katalytisch aktiven Substanzen auf die Oberflächen der Kanalwände eines Wandflusswabenkörpers eine Erhöhung der Umsetzung der Schadstoffe im Abgas erzielt werden kann. Auch Kombinationen von AufWand- und In-Wand-Beschichtung mit katalytisch aktivem Material sind möglich, wodurch die katalytische Performance weiter gesteigert werden kann, ohne dass sich der Staudruck wesentlich erhöht.

Neben der katalytischen Wirksamkeit ist eine weitere Funktionalität des Filters, die durch eine Beschichtung verbessert werden kann, seine Filtrationseffizienz, also die Filterwirkung selbst. In der WO2011151711A1 wird eine Methode beschrieben, mit der ein nicht beschichteter oder katalytisch beschichteter Filter, der das katalytische aktive Material in den Kanalwänden trägt (In-Wand-Beschichtung mit Washcoat) mit einem trockenen Aerosol beaufschlagt wird. Das Aerosol wird durch die Verteilung eines pulverförmigen mineralischen Materials bereitgestellt und mittels eines Gasstroms über die Einlassseite eines Wandflussfilters geführt. Hierbei agglomerieren die einzelnen Partikel mit einer Partikelgröße von 0,2 $\mu$m bis 5 $\mu$m zu einem verbrückten Netzwerk an Partikeln und werden als Schicht auf der Oberfläche der einzelnen den Wandflussfilter durchziehenden Einlasskanäle abgeschieden. Die typische Beladung eines Filters mit dem Pulver beträgt zwischen 5 g und 50 g pro Liter Filtervolumen. Es wird ausdrücklich darauf hingewiesen, dass es nicht erwünscht ist, mit dem Metalloxid eine Beschichtung in den Poren des Wandflussfilters zu erreichen.

Eine weitere Methode zur Erhöhung der Filtrationseffizienz von katalytisch nicht aktiven Filtern wird in der WO2012030534A1 beschrieben. Hierbei wird auf den Wänden der Strömungskanäle der Einlassseite eine Filtrationsschicht ("discriminating layer") durch Ablagerung von keramischen Partikel über ein Partikelaerosol erzeugt. Die Schichten bestehen aus Oxiden von Zirkonium, Aluminium oder Silizium, bevorzugt in Faserform von 1 nm bis 5 $\mu$m Länge und haben eine Schichtdicke von mehr als 10 $\mu$m, in der Regel 25 $\mu$m bis 75 $\mu$m. Nach dem Beschichtungsprozess werden die aufgetragenen Pulverpartikel in einem Wärmeprozess kalziniert.

Ein weiteres Verfahren bei dem zur Erhöhung der Filtrationseffizienz von katalytisch nicht aktiven Wandflussfiltern eine Membran ("trapping layer") auf den Oberflächen der Einlasskanäle von Filtern erzeugt wird, ist in der Patentschrift US8277880B2 beschrieben. Die Filtrationsmembran auf den Oberflächen der Einlasskanäle wird durch Durchsaugen eines mit Keramikpartikeln (z. B. Siliciumcarbid oder Cordierit) beladenen Gasstroms realisiert. Der Wabenkörper wird nach dem Aufbringen der Filterschicht bei Temperaturen von größer 1000°C gebrannt um die Haftfestigkeit der Pulverschicht auf den Kanalwänden zu erhöhen. In EP2502661A2 und EP2502662B1 werden weitere Aufwandbeschichtungen durch Pulverapplikation erwähnt.

Eine Beschichtung innerhalb der Poren eines Wandflussfiltersubstrats mittels Verdüsung von trockenen Partikeln wird in der US8388721 B2 beschrieben. Hier soll allerdings das Pulver tief in die Poren eindringen. 20 % bis 60 % der Oberfläche der Wand soll für Rußpartikel zugänglich, demnach offenbleiben. Abhängig von der Strömungsgeschwindigkeit des Pulver-Gas-Gemisches kann ein mehr oder minder starker Pulvergradient zwischen Einlass- und Auslassseite eingestellt werden. Die Poren der Kanalwände des nach US8388721 B2 mit Pulver in den Poren beschichteten Filters können nachträglich mit einer katalytisch aktiven Komponente beschichtet werden. Auch hier befindet sich das katalytisch aktive Material in den Kanalwänden des Filters.

Ebenfalls wird die Einbringung des Pulvers in die Poren, z. B. mithilfe eines Aerosolgenerators, in der EP2727640A1 beschrieben. Hier wird ein nicht katalytisch beschichteter Wandflussfilter mit einem z. B. Aluminiumoxidpartikel enthaltenden Gasstrom dergestalt beschichtet, dass die kompletten Partikel, die eine Partikelgröße von 0,1 $\mu$m bis 5 $\mu$m aufweisen, als poröse Füllung in den Poren des Wandflussfilters abgeschieden werden. Die Partikel selber können eine weitere Funktionalität des Filters zusätzlich zu der Filterwirkung realisieren. Beispielhaft werden diese Partikel in einer Menge von mehr als 80 g/l bezogen auf das Filtervolumen in den Poren des Filters abgeschieden. Sie füllen dabei 10% bis 50% des Volumens der gefüllten Poren in den Kanalwänden aus. Dieser Filter weist sowohl mit Ruß beladen wie auch ohne Ruß eine gegenüber dem unbehandelten Filter verbesserte Filtrationseffizienz bei einem geringeren Abgasgegendruck des mit Ruß beladenen Filters auf.

In der WO2018115900A1 werden Wandflussfilter mit einer ggf. trockenen synthetischen Asche dergestalt beschichtet, dass eine kontinuierliche Membranschicht auf den Wänden des ggf. katalytisch beschichteten Wandflussfilters entsteht.

Alle oben aufgeführten Patente des Standes der Technik haben das Ziel, die Filtrationseffizienz eines Filters durch eine Belegung des Filters mit einem Pulver zu erhöhen. Die derart optimierten Filter können auch vor der Pulverbeschichtung eine katalytisch aktive Beschichtung in den porösen Kanalwänden tragen. In keinem der Beispiele finden sich jedoch Hinweise darauf, gleichzeitig die katalytische Wirkung eines Filters und die Erhöhung der Filtrationseffizienz zu optimieren.

Ein Versuch katalytische Wirkung und Filtrationseffizienz gleichzeitig zu optimieren ist in der DE102018127955A1 offenbart.

Es besteht aber weiterhin Bedarf an Partikelfiltern, bei denen sowohl die katalytische Aktivität und die Filtrationseffizienz im Hinblick auf den Abgasgegendruck optimiert sind. Aufgabe der vorliegenden Erfindung ist es, einen entsprechenden Partikelfilter zur Verfügung zu stellen, bei dem eine ausreichende Filtrationseffizienz mit einer möglichst geringen Erhöhung des Abgasgegendrucks und einer hohen katalytischen Aktivität gekoppelt ist.

Diese und weitere sich aus dem Stand der Technik in naheliegender Weise ergebenden Aufgaben werden durch einen Partikelfilter gemäß den Ansprüchen 1 bis 11 löst. Anspruch 12 ist auf die Herstellung eines erfindungsgemäßen Partikelfilters gerichtet. Anspruch 13 zielt auf die Verwendung des Partikelfilters zur Abgasnachbehandlung von Verbrennungsmotoren ab.

Die vorliegende Erfindung betrifft einen Wandflussfilter zur Entfernung von Partikeln aus dem Abgas von Verbrennungsmotoren, das ein Wandflussfiltersubstrat der Länge L und voneinander verschiedene Beschichtungen Z und F umfasst, wobei das Wandflussfiltersubstrat Kanäle E und A aufweist, die sich parallel zwischen einem ersten und einem zweiten Ende des Wandflussfiltersubstrats erstrecken, durch poröse Wände getrennt sind und Oberflächen $O_E$ bzw. $O_A$ bilden und wobei die Kanäle E am zweiten Ende und die Kanäle A am ersten Ende verschlossen sind und wobei sich die Beschichtung Z in den porösen Wänden und/oder auf den Oberflächen $O_A$, nicht aber auf den Oberflächen $O_E$ befindet, und Palladium und/oder Rhodium und ein Cer/Zirkonium-Mischoxid umfasst, dadurch gekennzeichnet, dass sich die Beschichtung F in den porösen Wänden und/ oder auf den Oberflächen $O_E$, nicht aber auf den Oberflächen $O_A$ befindet und ein mineralisches Material und kein Edelmetall umfasst, wobei das mineralische Material ein Phyllosilikat wie Kaolin, Sepliolith, Montmorillonit bzw. Bentonit, Muskovit, Vermiculit ist.

Bei der bestimmungsgemäßen Verwendung des erfindungsgemäßen Wandflussfilters zur Reinigung von Abgas von Verbrennungsmotoren, fließt das Abgas an einem Ende in den Filter ein und verlässt es nach Durchtritt durch die porösen Wände an anderen Ende wieder. Tritt also zum Beispiel das Abgas am ersten Ende in den Filter ein, so bezeichnen die Kanäle E die Eingangskanäle oder anströmseitigen Kanäle. Nach Durchtritt durch die porösen Wände tritt es dann am zweiten Ende aus dem Filter aus, so dass die Kanäle A die Ausgangskanäle oder abströmseitigen Kanäle bezeichnen. Als Wandflusssubstrat können alle aus dem Stand der Technik bekannten und auf dem Gebiet der Autoabgaskatalyse üblichen keramischen Wandflussfiltersubstrate eingesetzt werden. Bevorzugt werden poröse Wandflussfiltersubstrate aus Cordierit, Siliziumcarbid oder Aluminiumtitanat verwendet. Diese Wandflussfiltersubstrate weisen Kanäle E und Kanäle A auf, die wie oben beschrieben als Eingangskanäle, die auch Anströmkanäle genannt werden können, und als Ausgangskanäle, die auch Abströmkanäle genannt werden können, fungieren. Die abströmseitigen Enden der Anströmkanäle und die anströmseitigen Enden der Abströmkanäle sind gegeneinander versetzt mit in der Regel gasdichten "Stopfen" verschlossen. Hierbei wird das zu reinigende Abgas, das das Filtersubstrat durchströmt, zum Durchtritt durch die poröse Wand zwischen An- und Abströmkanal gezwungen, was eine Partikelfilterwirkung bedingt. Durch die Porosität, Poren-/Radienverteilung und Dicke der Wand kann die Filtrationseigenschaft für Partikel ausgelegt werden. Erfindungsgemäß beträgt die Porosität der unbeschichteten Wandflussfiltersubstrate in der Regel mehr als 40 %, zum Beispiel von 40 % bis 75 %, besonders von 50 % bis 70 % [gemessen nach DIN 66133 - neueste Fassung am Anmeldetag]. Die mittlere Porengröße $d_{50}$ der unbeschichteten Wandflussfiltersubstrate beträgt wenigstens 7 μm, zum Beispiel von 7 μm bis 34 μm, bevorzugt mehr als 10 μm, insbesondere mehr bevorzugt von 10 μm bis 25 μm oder ganz bevorzugt von 15 μm bis 20 μm [gemessen nach DIN 66134 neueste Fassung am Anmeldetag], wobei unter dem $d_{50}$-Wert der Porengrößenverteilung des Wandflußfiltersubstrates zu verstehen ist, dass 50 % des gesamten, durch Quecksilberporosimetrie bestimmbaren, Porenvolumens gebildet werden durch Poren, deren Durchmesser kleiner oder gleich dem als $d_{50}$ angegebenen Wert ist. Im Falle der erfindungsgemäßen Wandflussfilter weisen die mit den Beschichtungen Z und F und gegebenenfalls Beschichtung Y (siehe unten) versehenen Wandflussfiltersubstrate besonders bevorzugt eine Porengröße $d_{50}$ von 10 μm bis 20 μm und eine Porosität von 50 % bis 65 % auf. Dem Fachmann ist bekannt, dass aufgrund der Stopfen, die die Kanäle E und A gegeneinander versetzt verschießen, gegebenenfalls nicht die ganze Länge L des Wandflussfiltersubstrates zur Beschichtung zur Verfügung steht. So sind beispielsweise die Kanäle E am zweiten Ende des Wandflussfiltersubstrates verschlossen, so dass folglich die Oberfläche O$_\varepsilon$, die zur Beschichtung zur Verfügung steht, geringfügig kleiner als die Länge L sein kann. Dies kommt selbstverständlich nur dann zum Tragen, wenn eine Beschichtung auf 100% der Länge L oder wenig darunter vorliegt. Nachstehend wird in diesen Fällen der Einfachheit halber trotzdem von 100% der Länge L gesprochen.

Sofern sich die Beschichtung Z auf den Oberflächen O$_A$ des Wandflussfiltersubstrates befindet, erstreckt sie sich bevorzugt ausgehend vom zweiten Ende des Wandflussfiltersubstrates auf 50 bis 90 % der Länge L.

Bei der Beschichtung auf den Oberflächen O$_A$ handelt es sich um eine sogenannte Aufwandbeschichtung. Darunter ist zu verstehen, dass sich die Beschichtung über die Oberflächen O$_A$ in die Kanäle A des Wandflussfiltersubstrates erheben, den Kanalquerschnitt mithin erniedrigen. In dieser Ausführungsform werden die an die Oberflächen O$_A$ angrenzenden Poren der porösen Wand nur untergeordnet mit der Beschichtung Z gefüllt. Mehr als 80 %, bevorzugt mehr als 90 % der Beschichtung Z befindet sich nicht in der porösen Wand.

Aufwandbeschichtungen weisen eine gewisse Erhebung über die Wandoberfläche auf. Die Dicke der Schichten liegt aber in der Regel bei 5 bis 250 μm, vorzugsweise 7,5 bis 225 μm und ganz bevorzugt bei 10 bis 200 μm, wobei die Dicke der Schicht bevorzugt in der Mitte eines jeweiligen Kanalstegs bestimmt wird und nicht in den Ecken. Zur Bestimmung der Schichtdicke eignen sich dem Fachmann bekannte, gängige Analysemethoden, wie zum Beispiel Rasterelektronenmikroskopie.

Sofern sich die Beschichtung Z in den porösen Wänden des Wandflussfiltersubstrates befindet, erstreckt sie sich bevorzugt ausgehend vom ersten Ende des Wandflussfiltersubstrates auf 50 bis 100 % der Länge L.

Bei der Beschichtung in den porösen Wände handelt es sich um eine sogenannte Inwandbeschichtung. In dieser Ausführungsform werden die an die porösen Wände angrenzenden Oberflächen O$_A$ nur untergeordnet mit der Beschichtung Z beschichtet.

Die minimale Länge der Beschichtung Z beträgt mindestens 1,25 cm, vorzugsweise mindestens 2,0 cm und ganz bevorzugt mindestens 2,5 cm, gerechnet vom zweiten Ende des Wandflussfiltersubstrates.

Die Beschichtung Z kann einen Dickegradienten über die Länge L dergestalt aufweisen, dass die Dicke der Beschichtung Z entlang der Länge L des Wandflussfilters vom zweiten Ende zum ersten Ende hin zunimmt.. Dabei kann es sein, dass die Beschichtung vorzugsweise mehr als 2-mal, mehr bevorzugt bis zu mehr als 3-mal die Dicke an einem Beschichtungsende aufweist als am anderen Beschichtungsende. Die Dicke ist dabei die Höhe, mit der sich die Beschichtung Z über die Oberfläche O$_A$ erhebt. Durch den Dickegradienten der Beschichtung auf den Kanalwänden erreicht man zudem, dass sich die Filtrationseffizienz über die gesamte Länge L des Filters angleicht. Eine gleichmäßigere Abscheidung des Rußes über die gesamte Filterwand und damit ein verbesserter Abgasgegendruckanstieg und ggf. ein besserer Abbrand des Rußes sind das Resultat.

Die Beschichtung Z kann aber auch einen Dickegradienten über die Länge L dergestalt aufweisen, dass die Dicke der Beschichtung Z entlang der Länge L des Wandflussfilters vom zweiten Ende zum ersten Ende hin abnimmt. Dabei kann es sein, dass die Beschichtung vorzugsweise mehr als 2-mal, mehr bevorzugt bis zu mehr als 3-mal die Dicke an einem Beschichtungsende aufweist wie am anderen Beschichtungsende. Die Dicke ist dabei die Höhe, mit der sich die Beschichtung Z über die Oberfläche O$_A$ erhebt. Durch den Dickegradienten der Beschichtung auf den Kanalwänden erreicht man zudem, dass sich die Filtrationseffizienz über die gesamte Länge L des Filters angleicht. Eine gleichmäßigere Abscheidung des Rußes über die gesamte Filterwand und damit ein verbesserter Abgasgegendruckanstieg und ggf. ein besserer Abbrand des Rußes sind das Resultat.

Die Beschichtung Z ist insbesondere aufgrund der Bestandteile Palladium und/oder Rhodium eine katalytisch aktive Beschichtung. Unter "katalytisch aktiv" wird im Rahmen vorliegender Erfindung die Fähigkeit verstanden, schädliche Bestandteile des Abgases von Verbrennungsmotoren in weniger schädliche zu verwandeln. Insbesondere sind hier die Abgasbestandteile NO$_X$, CO und HC zu nennen. Folglich ist Beschichtung Z besonders bevorzugt Dreiwege-katalytisch aktiv, insbesondere bei Betriebstemperaturen von 250 bis 1100 °C.

Beschichtung Z enthält die Edelmetalle Palladium und/oder Rhodium, wobei nur ausnahmsweise auch Platin als weiteres Edelmetall vorliegt. Besonders bevorzugt enthält Beschichtung Z Palladium und Rhodium und kein Platin.

In einer weiteren Ausführungsform enthält Beschichtung Z die Edelmetalle Platin und/oder Rhodium, wobei nur ausnahmsweise auch Palladium als weiteres Edelmetall vorliegt.

In einer weiteren Ausführungsform enthält Beschichtung Z die Edelmetalle Platin und Palladium und gegebenenfalls Rhodium. In dieser Ausführungsform ist es vorteilhaft, wenn das Massenverhältnis von Platin zu Palladium 15:1 bis 1:15 beträgt, insbesondere 10:1 bis 1:10.

Bezogen auf das erfindungsgemäße Partikelfilter ist der Anteil von Rhodium am gesamten Edelmetallgehalt insbesondere größer oder gleich 5 Gew.-%, bevorzugt größer oder gleich 10 Gew.-%. Beispielsweise ist der Anteil von Rhodium am gesamten Edelmetallgehalt 5 bis 20 Gew.-% oder 5 bis 15 Gew.-%. Die Edelmetalle werden üblicherweise in Mengen von 0,10 bis 5 g/l, bezogen auf das Volumen des Wandflussfiltersubstrates eingesetzt.

Die Edelmetalle sind üblicherweise auf einem oder mehreren Trägermaterialien fixiert. Als Trägermaterialien kommen alle dem Fachmann für diesen Zweck geläufigen Materialien in Betracht. Solche Materialien sind insbesondere Metalloxide mit einer BET-Oberfläche von 30 bis 250 m$^2$/g, bevorzugt von 100 bis 200 m$^2$/g (bestimmt nach DIN 66132 - neueste Fassung am Anmeldetag). Besonders geeignete Trägermaterialien für die Edelmetalle sind ausgewählt aus der Reihe bestehend aus Aluminiumoxid, dotiertes Aluminiumoxid, Siliziumoxid, Titandioxid und Mischoxiden aus einem oder mehreren davon. Dotierte Aluminiumoxide sind beispielsweise Lanthanoxid-, Zirkoniumoxid- Bariumoxid- und/oder Titanoxid-dotierte Aluminiumoxide. Mit Vorteil wird Aluminiumoxid oder Lanthan-stabilisiertes Aluminiumoxid eingesetzt, wobei im letztgenannten Fall Lanthan in Mengen von insbesondere 1 bis 10 Gew.-%, bevorzugt 3 bis 6 Gew.-%, jeweils berechnet als La$_2$O$_3$ und bezogen auf das Gewicht des stabilisierten Aluminiumoxides, verwendet wird.

Auch im Fall von mit Bariumoxid dotiertem Aluminiumoxid ist der Anteil an Bariumoxid insbesondere 1 bis 10 Gew.-%, bevorzugt 3 bis 6 Gew.-%, jeweils berechnet als BaO und bezogen auf das Gewicht des stabilisierten Aluminiumoxides.

Ein weiteres geeignetes Trägermaterial ist Lanthan-stabilisiertes Aluminiumoxid, dessen Oberfläche mit Lanthanoxid, mit Bariumoxid und/oder mit Strontiumoxid beschichtet ist.

Beschichtung Z umfasst bevorzugt mindestens ein Aluminiumoxid oder dotiertes Aluminiumoxid.

Beschichtung Z enthält mindestens ein Cer/Zirkonium-Mischoxid, das als Sauerstoffspeicherkomponente fungiert. Das Masseverhältnis von Ceroxid zu Zirkoniumoxid kann in diesen Produkten in weiten Grenzen variieren. Es beträgt beispielsweise 0,1 bis 1,5, bevorzugt 0,15 bis 1 oder 0,2 bis 0,9.

Bevorzugte Cer/Zirkonium-Mischoxide umfassen ein oder mehrerer Seltenerdmetalloxide und können somit als Cer/Zirkonium/Seltenerdmetall-Mischoxide bezeichnet werden. Der Begriff "Cer/Zirkonium/Seltenerdmetall-Mischoxid" im Sinne vorliegender Erfindung schließt physikalische Mischungen aus Ceroxid, Zirkoniumoxid und Seltenerdoxid aus. Vielmehr sind "Cer/Zirkonium/Seltenerdmetall-Mischoxide" durch eine weitgehend homogene, dreidimensionale Kristallstruktur gekennzeichnet, die idealerweise frei ist von Phasen aus reinem Ceroxid, Zirkoniumoxid bzw. Seltenerdoxid (feste Lösung). Je nach Herstellungsverfahren können aber auch nicht vollständig homogene Produkte entstehen, die in der Regel ohne Nachteil verwendet werden können. Analoges gilt für Cer/Zirkonium-Mischoxide, die kein Seltenerdmetalloxid enthalten. Im Übrigen umfasst der Begriff Seltenerdmetall bzw. Seltenerdmetalloxid im Sinne vorliegender Erfindung kein Cer bzw. kein Ceroxid.

Als Seltenerdmetalloxide in den Cer/Zirkonium/Seltenerdmetall-Mischoxiden kommen beispielsweise Lanthanoxid, Yttriumoxid, Praseodymoxid, Neodymoxid und/oder Samariumoxid in Betracht. Bevorzugt sind Lanthanoxid, Yttriumoxid und/oder Praseodymoxid. Besonders bevorzugt sind Lanthanoxid und/oder Yttriumoxid und ganz besonders bevorzugt sind Lanthanoxid und Yttriumoxid, Yttriumoxid und Praseodymoxid, sowie Lanthanoxid und Praseodymoxid. In Ausführungsformen der vorliegenden Erfindung sind die Sauerstoffspeicherkomponenten frei von Neodymoxid.

Der Anteil an Seltenerdmetalloxid in den Cer/Zirkonium/Seltenerdmetall-Mischoxiden liegt insbesondere bei 3 bis 20 Gew.-% bezogen auf das Cer/Zirkonium/Seltenerdmetall-Mischoxid.

Sofern die Cer/Zirkonium/Seltenerdmetall-Mischoxide als Seltenerdmetall Yttriumoxid enthalten, so ist dessen Anteil bevorzugt 4 bis 15 Gew.-% bezogen auf das Cer/Zirkonium/Seltenerdmetall-Mischoxid. Sofern die Cer/Zirkonium/Seltenerdmetall-Mischoxide als Seltenerdmetall Praseodymoxid enthalten, so ist dessen Anteil bevorzugt 2 bis 10 Gew.-% bezogen auf das Cer/Zirkonium/Seltenerdmetall-Mischoxid. Sofern die Cer/Zirkonium/Seltenerdmetall-Mischoxide als Seltenerdmetall Lanthanoxid und ein weiteres Seltenerdoxid enthalten, wie zum Beispiel Yttriumoxid oder Praseodymoxid, so ist deren Massenverhältnis insbesondere 0,1 bis 1,25, bevorzugt 0,1 bis 1.

Üblicherweise enthält die Beschichtung Z Sauerstoffspeicherkomponenten in Mengen von 15 bis 120 g/l, bezogen auf das Volumen des Wandflussfiltersubstrates. Das Masseverhältnis von Trägermaterialien und Sauerstoffspeicherkomponenten in der Beschichtung Z beträgt üblicherweise 0,25 bis 1,5, beispielsweise 0,3 bis 1,3.

In einer Ausführungsform beträgt das Gewichtsverhältnis der Summe der Massen aller Aluminiumoxide (einschließlich dotierter Aluminiumoxide) zur Summe der Massen aller Cer/Zirkonium-Mischoxide in Beschichtung Z 10:90 bis 75:25.

Beispielsweise umfasst die Beschichtung Z Lanthan-stabilisiertes Aluminiumoxid, Rhodium, Palladium oder Palladium und Rhodium und ein Cer/Zirkonium/Seltenerdmetall-Mischoxid, das Yttriumoxid und Lanthanoxid als Seltenerdmetalloxide enthält.

In anderen Ausführungsformen der vorliegenden Erfindung umfasst die Beschichtung Z Lanthan-stabilisiertes Aluminiumoxid, Rhodium, Palladium oder Palladium und Rhodium und ein Cer/Zirkonium/Seltenerdmetall-Mischoxid, das Praseodymoxid und Lanthanoxid als Seltenerdmetalloxide enthält.

In anderen Ausführungsformen der vorliegenden Erfindung umfasst die Beschichtung Z Lanthan-stabilisiertes Aluminiumoxid, Rhodium, Palladium oder Palladium und Rhodium, ein Cer/Zirkonium/Seltenerdmetall-Mischoxid, das Praseodymoxid und Lanthanoxid als Seltenerdmetalloxide enthält und ein zweites Cer/Zirkonium/Seltenerdmetall-Mischoxid, das Yttriumoxid und Lanthanoxid als Seltenerdmetalloxide enthält.

Die Beschichtung Z enthält bevorzugt keinen Zeolithen und kein Molsieb.

Sofern Beschichtung Z Aluminiumoxid bzw. dotiertes Aluminiumoxid enthält, ist das Gewichtsverhältnis der Summe der Massen aller Aluminiumoxide bzw. dotierten Aluminiumoxiden zur Summe der Massen aller Cer/Zirkonium-Mischoxide bzw. Cer/Zirkonium/Seltenerdmetall-Mischoxide insbesondere 10:90 bis 75:25.

Beschichtung F umfasst erfindungsgemäß ein mineralisches Material und kein Edelmetall. Sie ist damit nicht katalytisch aktiv im Sinne vorliegender Erfindung, das heißt sie ist nicht in der Lage die Abgaskomponenten CO und HC zu oxidieren und $NO_x$ zu reduzieren.

Bevorzugt besteht Beschichtung F aus einem oder mehreren mineralischen Materialien, enthält also daneben keine weiteren Bestandteile.

Geeignete mineralische Materialien enthalten insbesondere ein oder mehrerer Elemente ausgewählt aus der Gruppe bestehend aus Silizium, Aluminium, Titan, Zirkonium, Cer, Eisen, Zink, Magnesium, Kalzium, Kalium und Natrium.

Das mineralische Material ist ein Phyllosilikat wie Kaolin, Sepiolith, Montmorillonit bzw. Bentonit, Muskovit, Vermiculit.

Die Beschichtung F weist vorteilhafterweise eine spezifische Oberfläche von mindestens 50 m²/g auf, bevorzugt von 100 bis 350 m²/g.

Es ist darüber hinaus von Vorteil, wenn die Beschichtung F eine Schüttdichte von 300 bis 3000 g/l, bevorzugt von 500 bis 2500 g/l, aufweist.

Der erfindungsgemäße Wandflussfilter kann einen zunehmenden Konzentrationsgradienten der Beschichtung F in Längsrichtung des Filters von seinem ersten zum zweiten Ende aufweisen. Unter "zunehmenden Gradienten" wird erfindungsgemäß die Tatsache verstanden, dass sich der Gradient der Konzentration der Beschichtung F im Filter in axialer Richtung von einem zum anderen Ende vergrößert, ggf. von negativen Werten hin zu positiveren Werten.

Im Falle einer bestimmungsgemäßen Verwendung des Wandflussfilters, bei der das Abgas an seinem ersten Ende ein- und am zweiten Ende ausfließt, befindet sich bevorzugt eine größere Menge Beschichtung F in der Nähe des zweiten Endes des Wandflussfiltersubstrates und eine deutlich geringere Menge Beschichtung F in der Nähe des ersten Endes des Wandflussfiltersubstrates.

Simulationen des Gasflusses in einem Wandflussfilter haben gezeigt, dass für die Filtrationseigenschaft des Gesamtfilters hauptsächlich (zu mehr als 50 %) das letzte Drittel des Substrats verantwortlich ist. Durch eine verstärkte Aufbringung von Beschichtung F im letzten Drittel des Filters wird der Staudruck dort verstärkt erhöht, was auf die geringere Permeabilität zurückzuführen ist, und die Durchströmung verschiebt sich mehr in die ersten zwei Drittel des Filters. Daher sollte der Filter einen stärker steigenden Gradienten der Beschichtung F vom Eingang zum Ausgang hin aufweisen, um seine Filtrationswirkung zu erhöhen. Für das Einstellen eines vorteilhaften Abgasgegendrucks gilt dies mutatis mutandis. Hier sollte demgemäß ggf. ein weniger stark zunehmender Gradient der Konzentration von Beschichtung F gewählt werden.

Die Beschichtung F befindet sich bevorzugt in den porösen Wänden des Wandflussfiltersubstrates, woraus folgt, dass die Partikelgröße des mineralischen Materials an die Porengröße des Wandflussfiltersubstrates angepasst sein muss. Die Partikel des mineralischen Materials weisen somit insbesondere eine definierte Partikelgrößenverteilung auf. Da Wandflussfiltersubstrate üblicherweise Poren verschiedener Größen enthalten, ist idealerweise für die großen Poren ein Anteil größerer Partikel vorhanden und für die kleineren Poren ein Anteil kleinerer Partikel. Dies bedeutet, dass das mineralische Material bevorzugt eine multimodale oder breite q3-Partikelgrößenverteilung aufweist. Für die Definition der Partikelgrößen- bzw. Korngrößenverteilung des mineralischen Materials unterscheidet man in Abhängigkeit von der Methode, mit der die Menge der Partikel bestimmt wird, u.a. zwischen anzahlbezogenen (q0) und volumenbezogenen (q3) Korngrößenverteilungen (M. Stieß, Mechanische Verfahrenstechnik - Partikeltechnologie 1, Springer, 3. Auflage 2009, Seite 29).

Dabei sollte die Größe der groben Partikel (definiert durch den d90-Wert der q3-Korngrößenverteilung, gemessen mit Tornado-Trockendispergierungsmodul der Firma Beckmann gemäß neuester ISO 13320-1 am Anmeldetag) des mineralischen Materials kleiner oder gleich 60% der mittleren volumenbezogenen q3-Porengröße (d50) des verwendeten Filters (gemessen nach DIN 66134 - neueste Fassung am Anmeldetag) sein, bevorzugt kleiner 50%. Die mittlere q3-Korngröße des mineralischen Materials (d50) sollte 5 % bis 30% der mittleren q3-Porengröße (d50) des verwendeten Filters, bevorzugt 7% bis 25% und sehr bevorzugt 10% bis 25% entsprechen. Der d10-Wert der q3-Korngößenverteilung des mineralischen Materials, welcher den Feinanteil beschreibt, sollte 20% bis 60% der mittleren q3-Korngröße (d50) des mineralischen Materials, bevorzugt 25% bis 50% und besonders bevorzugt 25% bis 40% betragen. Der d10-Wert der anzahlbezogenen q0-Korngrößenverteilung sollte allgemein größer 0,05 $\mu$m, bevorzugt größer 0,08 $\mu$m und besonders bevorzugt größer 0,1 $\mu$m sein.

Die Partikel des mineralischen Materials weisen insbesondere eine Gesamtoberfläche von größer als 5 m$^2$/l, bevorzugt größer 10 m$^2$/l und ganz besonders bevorzugt größer 15 m$^2$/l, bezogen auf das äußere Filtervolumen in Litern, auf.

Die Gesamtoberfläche der Partikel SV ergibt sich mit der Partikelröße x gemäß:

$$S_V[m^{-1}] = 6 \cdot \int_{x\_min}^{x\_max} x_i^{-1} \cdot q_0(x_i) \cdot dx = 6 \cdot \sum_{min}^{max} \frac{\Delta Q_3(x_i)}{x_i}$$

(M. Stieß, Mechanische Verfahrenstechnik - Partikeltechnologie 1, Springer, 3. Auflage 2009, Seite 35), und mit der Dichte der Partikel $\rho$ erhält man daraus die massebezogene Oberfläche (M. Stieß, Mechanische Verfahrenstechnik - Partikeltechnologie 1, Springer, 3. Auflage 2009, Seite 16):

$$S_m\left[\frac{m^2}{kg}\right] = \frac{S_V}{\rho_{Partikel}}$$

$$\ddot{a}u\ss ere\ Oberfl\ddot{a}che\ des\ Pulvers\ S_{\ddot{a}u\ss ere}[m^2] = S_m \cdot m_{Pulver}$$

Der Fachmann kann die Partikelgrößenverteilung, sowie die Gesamtoberfläche des mineralischen Materials eines fertigen erfindungsgemäßen Wandflussfilters in einfacher Weise bestimmen, indem er das mineralische Material aus dem Wandflussfiltersubstrat mit Wasser auswäscht. Er muss das ausgewaschene Material lediglich auffangen, trocknen und dann mit den ihm bekannten bzw. oben genannten Methoden die gewünschten Parameter bestimmen.

Insbesondere herstellungsbedingt kann sich ein Teil der Beschichtung F auch auf der Oberfläche O$_E$ befinden. Insbesondere können sich 1 bis 90 % der gesamten Masse der Beschichtung F auf der Oberfläche O$_E$ befinden, bevorzugt jedoch 2 bis 70 % und besonders bevorzugt 3 bis 50 %.

Die Beschichtung F bildet auf der Oberfläche O$_\varepsilon$ bevorzugt keine zusammenhängende, kontinuierliche Schicht, sondern verstopft dabei selektiv die großen Poren des Wandflusssubstrats, was zu einem inselartigen Ablagerungsmuster führt.

Die Beschichtung F kann ganz oder teilweise als geschlossene Schicht auf den Oberflächen O$_\varepsilon$ vorliegen. In diesem Fall beträgt die Schichtdicke der Beschichtung F in der Regel 1 bis 75 $\mu$m, bevorzugt jedoch 5 bis 65 $\mu$m.

In einer erfindungsgemäßen Ausführungsform, bei der sich die Beschichtung Z auf den Oberflächen O$_A$ befindet, ist die Schichtdicke der Beschichtung F kleiner oder gleich der Schichtdicke der Beschichtung Z. Das Verhältnis der Schichtdicke der Beschichtung F zu der Schichtdicke der Beschichtung Z beträgt bevorzugt 0,1 bis 1, besonders bevorzugt 0,15 bis 0,95 und besonders bevorzugt 0,2 bis 0,9. Des Weiteren ist der mittlere Partikeldurchmesser d$_{50}$ des mineralischen Materials von Beschichtung F kleiner oder gleich dem mittleren Partikeldurchmesser d$_{50}$ der Beschichtung Z. Bevorzugt beträgt das Verhältnis des d$_{50}$ der Partikel von Beschichtung F zu dem d$_{50}$ der Partikel von Beschichtung Z 0,01 bis 1, bevorzugt 0,05 bis 0,9 und besonders bevorzugt 0,15 bis 0,8.

In einer erfindungsgemäßen Ausführungsform, bei der sich die Beschichtung Z in den Poren der Filterwand befindet, ist die Schichtdicke der Beschichtung F größer oder gleich der Schichtdicke der Beschichtung Z. Des Weiteren ist der mittlere Partikeldurchmesser d$_{50}$ des mineralischen Materials von Beschichtung F größer oder gleich dem mittleren Partikeldurchmesser d$_{50}$ der Beschichtung Z. Bevorzugt ist das Verhältnis des d$_{50}$ der Partikel von Beschichtung F zu dem d$_{50}$ der Partikel von Beschichtung Z 1 bis 7, bevorzugt 1,05 bis 6 und besonders bevorzugt 1,1 bis 5.

In einer erfindungsgemäßen Ausführungsform, bei der sich die Beschichtung Y auf den Oberflächen O$_E$ befindet, ist die Schichtdicke der Beschichtung F kleiner oder gleich der Schichtdicke der Beschichtung Y. Das Verhältnis der Schichtdicke der Beschichtung F zu der Schichtdicke der Beschichtung Y beträgt bevorzugt 0,1 bis 1, besonders bevorzugt 0,15 bis 0,95 und besonders bevorzugt 0,2 bis 0,9. Des Weiteren ist der mittlere Partikeldurchmesser d$_{50}$ des mineralischen Materials von Beschichtung F kleiner oder gleich dem mittleren Partikeldurchmesser d$_{50}$ der Beschichtung Y. Bevorzugt beträgt das Verhältnis des d$_{50}$ des mineralischen Materials von Beschichtung F zu dem dso der Partikel von Beschichtung Y 0,01 bis 1, bevorzugt 0,05 bis 0,9 und besonders bevorzugt 0,15 bis 0,8.

In einer erfindungsgemäßen Ausführungsform, bei der sich die Beschichtung Y in den Poren der Filterwand befindet, ist die Schichtdicke der Beschichtung F größer oder gleich der Schichtdicke der Beschichtung Y. Des Weiteren ist der mittlere Partikeldurchmesser d$_{50}$ des mineralischen Materials von Beschichtung F größer oder gleich dem mittleren Partikeldurchmesser d$_{50}$ der Beschichtung Y. Bevorzugt beträgt das Verhältnis des dso des mineralischen Materials von Beschichtung F zu dem d$_{50}$ der Partikel von Beschichtung Y 1 bis 7, bevorzugt 1,05 bis 6 und besonders bevorzugt 1,1 bis 5.

Bezogen auf das Volumen des Wandflussfiltersubstrates liegt Beschichtung F zum Beispiel in Mengen von weniger als 50 g/l, insbesondere von weniger als 40 g/l vor. Bevorzugt liegt Beschichtung F in Mengen von 2,5 bis 40 g/l bezogen auf das Volumen des Wandflussfiltersubstrates vor.

Die Beschichtung F kann sich über die gesamte Länge L des Wandflussfiltersubstrates oder nur über einen Teil davon erstrecken. Beispielsweise erstreckt sich Beschichtung F über 10 bis 100, 25 bis 80 oder 40 bis 60 % der Länge L.

In einer Ausführungsform des erfindungsgemäßen Wandflussfilters weist das Wandflussfiltersubstrat, eine Beschichtung Y auf, die von den Beschichtungen Z und F verschieden ist, die Platin, Palladium oder Platin und Palladium umfasst, die kein Rhodium und kein Cer/Zirkonium-Mischoxid enthält und die sich in den porösen Wänden und/ oder auf den Oberflächen $O_E$, nicht aber auf den Oberflächen $O_A$ befindet. Bevorzugt enthält Beschichtung Y Platin und Palladium mit einem Massenverhältnis Platin zu Palladium von 25:1 bis 1:25, besonders bevorzugt 15:1 bis 1:2.

In der Beschichtung Y liegen Platin, Palladium bzw. Platin und Palladium üblicherweise auf einem oder mehreren Trägermaterialien fixiert vor.

Als Trägermaterialien kommen alle dem Fachmann für diesen Zweck geläufigen Materialien in Betracht. Solche Materialien sind insbesondere Metalloxide mit einer BET-Oberfläche von 30 bis 250 m$^2$/g, bevorzugt von 100 bis 200 m$^2$/g (bestimmt nach DIN 66132 - neueste Fassung am Anmeldetag). Besonders geeignete Trägermaterialien sind ausgewählt aus der Reihe bestehend aus Aluminiumoxid, dotiertes Aluminiumoxid, Siliziumoxid, Titandioxid und Mischoxiden aus einem oder mehreren davon. Dotierte Aluminiumoxide sind beispielsweise Lanthanoxid-, Zirkoniumoxid- Bariumoxid- und/oder Titanoxid-dotierte Aluminiumoxide. Mit Vorteil wird Aluminiumoxid oder Lanthan-stabilisiertes Aluminiumoxid eingesetzt, wobei im letztgenannten Fall Lanthan in Mengen von 1 bis 10 Gew.-%, bevorzugt 3 bis 6 Gew.-%, jeweils berechnet als La$_2$O$_3$ und bezogen auf das Gewicht des stabilisierten Aluminiumoxides, verwendet wird.

Auch im Fall von mit Bariumoxid dotiertem Aluminiumoxid ist der Anteil an Bariumoxid insbesondere 1 bis 10 Gew.-%, bevorzugt 3 bis 6 Gew.-%, jeweils berechnet als BaO und bezogen auf das Gewicht des stabilisierten Aluminiumoxides.

Ein weiteres geeignetes Trägermaterial ist Lanthan-stabilisiertes Aluminiumoxid, dessen Oberfläche mit Lanthanoxid, mit Bariumoxid und/oder mit Strontiumoxid beschichtet ist.

Beschichtung Y umfasst bevorzugt mindestens ein Aluminiumoxid oder dotiertes Aluminiumoxid.

Die Beschichtung Y befindet sich in einer Ausführungsform ausschließlich auf den Oberflächen $O_E$ des Wandflussfiltersubstrates und erstreckt sich ausgehend von dessen ersten Ende auf einer Länge von 50 bis 90 % der Länge L.

Die Beschichtung Y befindet sich in einer anderen Ausführungsform in den porösen Wänden des Wandflussfiltersubstrates und erstreckt sich ausgehend von dessen ersten Ende bevorzugt auf einer Länge von 50 bis 100 % der Länge L.

Sofern Beschichtung Y vorhanden ist, so beträgt das Massenverhältnis von Beschichtung Y zu Beschichtung Z bevorzugt 0,05 bis 8,5.

Beispielsweise weist das Trägermaterial von Beschichtung Y ein größeres Porenvolumen auf, als das Trägermaterial von Beschichtung Z. Das Verhältnis der spezifischen Oberflächen der Trägeroxide von Beschichtung Y zu Beschichtung Z beträgt bevorzugt 0,5 bis 2, insbesondere 0,7 bis 1,5.

Beispielsweise ist das Verhältnis der Porenvolumen des mineralischen Materials von Beschichtung F zu dem Porenvolumen des Trägermaterials von Beschichtung Z bevorzugt 0,01 bis 3, insbesondere 0,05 bis 2,5. Das Verhältnis der spezifischen Oberflächen des mineralischen Materials von Beschichtung F zu der spezifischen Oberfläche der Trägeroxide von Beschichtung Z beträgt bevorzugt 0,1 bis 4, insbesondere 0,25 bis 3.

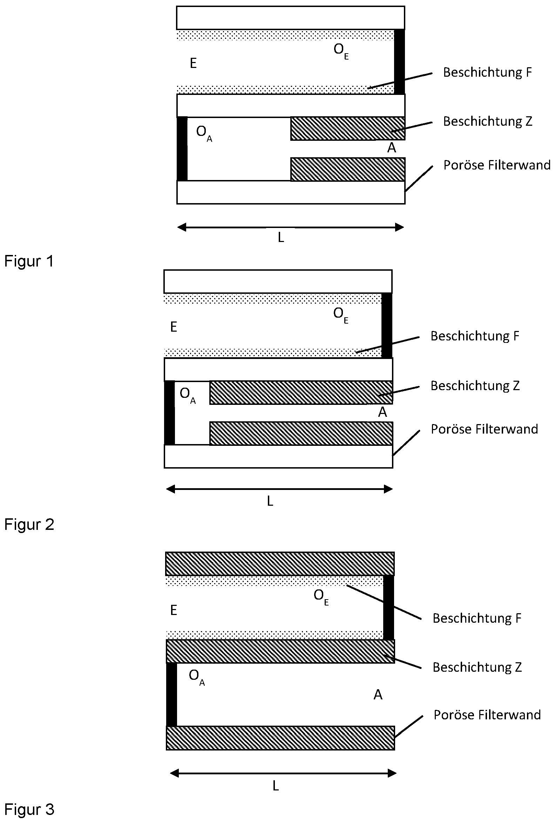

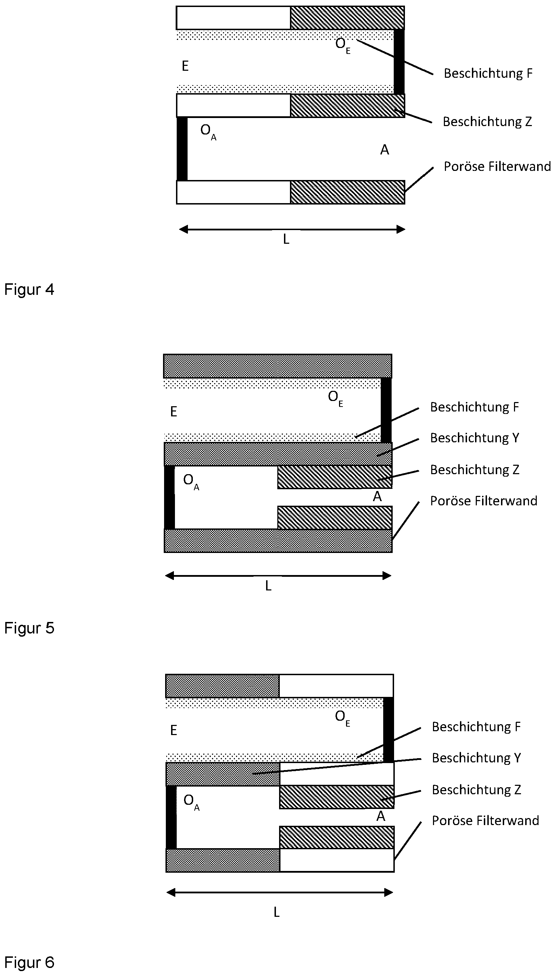

Die Beschichtungen Z, F und falls vorhanden Y können auf dem Wandflussfiltersubstrat in verschiedener Weise angeordnet sein. Die Figuren 1 bis 10 erläutern dies beispielhaft, wobei die Figuren 1 bis 4 erfindungsgemäße Wandflussfilter betreffen, die nur die Beschichtungen Z und F umfassen, während die erfindungsgemäßen Wandflussfilter gemäß der Figuren 5 bis 10 zusätzlich die Beschichtung Y umfassen.

Figur 1 betrifft einen erfindungsgemäßen Wandflussfilter, bei dem sich die Beschichtung Z in den Kanälen A auf den Oberflächen $O_A$ befindet und sich ausgehend vom zweiten Ende des Wandflussfiltersubstrates auf 50% der Länge L erstreckt. Die Beschichtung F befindet sich in den Kanälen E und erstreckt sich über die gesamte Länge L.

Auch Figur 2 betrifft einen erfindungsgemäßen Wandflussfilter, bei dem sich die Beschichtung Z in den Kanälen A auf den Oberflächen $O_A$ befindet. Ausgehend vom zweiten Ende des Wandflussfiltersubstrates erstreckt sie sich aber auf 80% der Länge L.

Die Beschichtung F befindet sich in den Kanälen E und erstreckt sich über die gesamte Länge L.

Figur 3 betrifft einen erfindungsgemäßen Wandflussfilter, bei dem sich die Beschichtung Z in den porösen Wänden befindet und über die gesamte Länge L erstreckt. Die Beschichtung F befindet sich in den Kanälen E und erstreckt sich ebenfalls über die gesamte Länge L.

Figur 4 betrifft einen erfindungsgemäßen Wandflussfilter, bei dem sich die Beschichtung Z in den porösen Wänden befindet und sich ausgehend vom zweiten Ende des Wandflussfiltersubstrates auf 50% der Länge L erstreckt.

Die Beschichtung F befindet sich in den Kanälen E und erstreckt sich über die gesamte Länge L.

Figur 5 betrifft einen erfindungsgemäßen Wandflussfilter, der sich von dem der Figur 4 nur dadurch unterscheidet, dass sich zusätzlich Beschichtung Y in den porösen Wänden über die gesamte Länge L befindet. Die Beschichtung F befindet sich in den Kanälen E und erstreckt sich über die gesamte Länge L.

Figur 6 betrifft einen erfindungsgemäßen Wandflussfilter, der sich von dem der Figur 4 nur dadurch unterscheidet, dass sich zusätzlich Beschichtung Y in den porösen Wänden und zwar ausgehend vom ersten Ende des Wandflussfiltersubstrates auf 50% der Länge L erstreckt. Die Beschichtung F befindet sich in den Kanälen E und erstreckt sich über die gesamte Länge L.

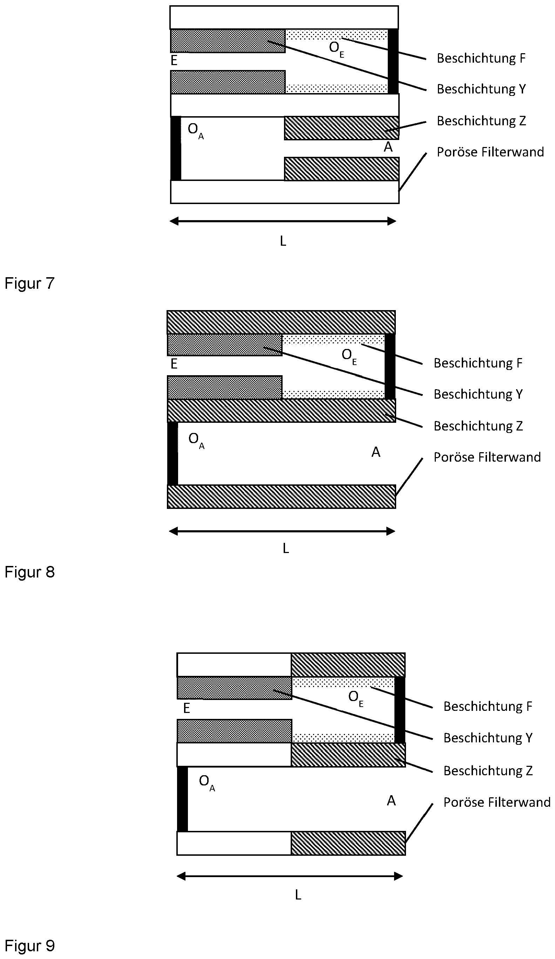

Figur 7 betrifft einen erfindungsgemäßen Wandflussfilter, bei dem sich die Beschichtung Z in den Kanälen A auf den Oberflächen $O_A$ befindet und sich über 50% der Länge L erstreckt. Außerdem befindet sich Beschichtung Y in den Kanälen E auf den Oberflächen $O_E$ und erstreckt sich ausgehend vom ersten Ende des Wandflussfiltersubstrates auf 50 % der Länge L. Die Beschichtung F befindet sich den Kanälen E und erstreckt sich ausgehend vom zweiten Endes des Wandflussfiltersubstrates über 50% der Länge L.

Figur 8 betrifft einen erfindungsgemäßen Wandflussfilter, bei dem sich die Beschichtung Z in den porösen Wänden befindet und sich über die gesamte Länge L erstreckt. Außerdem befindet sich Beschichtung Y in den Kanälen E auf den Oberflächen $O_E$ und erstreckt sich ausgehend vom ersten Ende des Wandflussfiltersubstrates auf 50 % der Länge L. Die Beschichtung F befindet sich den Kanälen E und erstreckt sich ausgehend vom zweiten Endes des Wandflussfiltersubstrates über 50% der Länge L.

Figur 9 betrifft einen erfindungsgemäßen Wandflussfilter, bei dem sich die Beschichtung Z in den porösen Wänden befindet und sich ausgehend vom zweiten Ende des Wandflussfiltersubstrates auf 50% der Länge L erstreckt. Außerdem befindet sich Beschichtung Y in den Kanälen E auf den Oberflächen $O_E$ und erstreckt sich ausgehend vom ersten Ende des Wandflussfiltersubstrates auf 50 % der Länge L. Die Beschichtung F befindet sich den Kanälen E und erstreckt sich ausgehend vom zweiten Endes des Wandflussfiltersubstrates über 50% der Länge L.

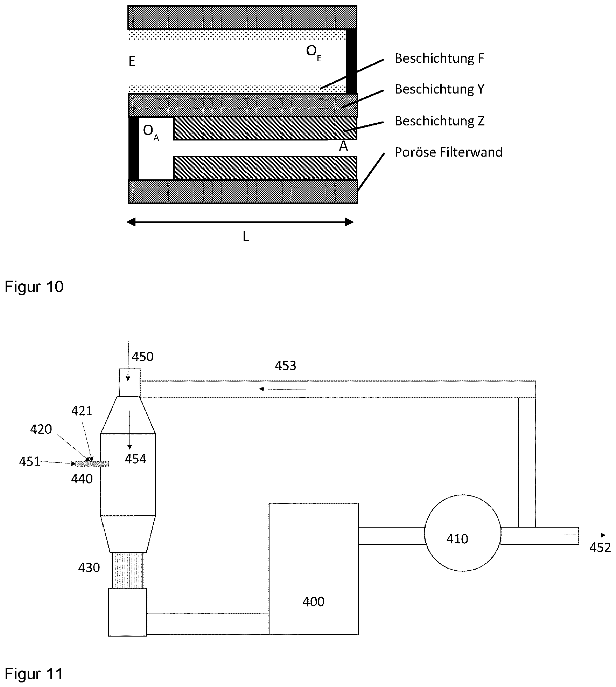

Figur 10 betrifft einen erfindungsgemäßen Wandflussfilter, bei dem sich die Beschichtung Z in den Kanälen A auf den Oberflächen $O_A$ befindet und sich ausgehend vom zweiten Endes des Wandflussfiltersubstrates auf 80% der Länge L erstreckt. Außerdem befindet sich Beschichtung Y in den porösen Wänden und erstreckt sich über die gesamte Länge L. Die Beschichtung F befindet sich den Kanälen E und erstreckt sich über die gesamte Länge L.

Das erfindungsgemäße Wandflussfilter kann dadurch hergestellt werden, dass die Beschichtungen Z, F und sofern vorhanden Y auf ein Wandflussfiltersubstrat aufgebracht werden.

Dabei wird die katalytische Aktivität nach Maßgabe des Fachmanns durch die Beschichtung des Wandflussfiltersubstrates mit der Beschichtung Z und sofern vorhanden mit der Beschichtung Y bereitgestellt.

Unter dem Begriff des Beschichtens wird demgemäß das Aufbringen von katalytisch aktiven Materialien auf ein Wandflussfiltersubstrat verstanden. Die Beschichtung übernimmt die eigentliche katalytische Funktion. Vorliegend erfolgt die Beschichtung durch das Aufbringen einer entsprechend wenig viskosen wässrigen Suspension der katalytisch aktiven Komponenten - auch Washcoat genannt - in oder auf die Wand des Wandflussfiltersubstrates, zum Beispiel gemäß EP1789190B1. Nach dem Aufbringen der Suspension wird das Wandflussfiltersubstrat jeweils getrocknet und gegebenenfalls bei erhöhter Temperatur kalziniert. Der katalytisch beschichtete Filter besitzt vorzugsweise eine Beladung von 20 g/l bis 200 g/l, vorzugsweise 30 g/l bis 150 g/l (Beschichtung Z bzw. Summe der Beschichtungen Z und Y). Die geeignetste Beladungsmenge eines in der Wand beschichteten Filters hängt von seiner Zelldichte, seiner Wandstärke und der Porosität ab.

Die Beschichtung F wird auf das Wandflussfiltersubstrat insbesondere dadurch aufgebracht, dass die Kanäle E des bereits mit Beschichtung Z und gegebenenfalls Beschichtung Y beschichteten trockenen Wandflussfiltersubstrats mit einem trockenen Pulver-Gas-Aerosol beaufschlagt wird, wobei das Pulver ein mineralisches Material enthält und insbesondere aus einem mineralischen Material besteht.

Durch die Beaufschlagung eines in konventioneller Art nasstechnisch mit Beschichtung Z und gegebenenfalls Y beschichteten, getrockneten und gegebenenfalls kalzinierten Wandflussfiltersubstrates mit einem trockenen Pulver-Gas-Aerosol erhält man einen erfindungsgemäßen Wandflussfilter mit überaus guter Filtrationseffizienz und nur wenig erhöhtem Abgasgegendruck und gleichzeitig hervorragender katalytischer Wirksamkeit.

Die erfindungsgemäßen katalytisch beschichteten und anschließend mit Pulver beaufschlagten Wandflussfilter unterscheiden sich von denen, die im Abgasstrang eines Fahrzeugs durch Ascheablagerung während des Betriebs entstehen. Erfindungsgemäß werden die katalytisch aktiven Wandflussfiltersubstrate gezielt mit einem bestimmten, trockenen Pulver bestäubt. Dies führt dazu, dass die Balance zwischen Filtrationseffizienz und Abgasgegendruck von Anfang an gezielt eingestellt werden kann. Nicht mitumfasst von der vorliegenden Erfindung sind daher Wandflussfilter, bei denen undefinierte Ascheablagerungen aus der Verbrennung von Kraftstoff z.B. im Zylinder während des Fahrbetriebs oder mittels eines Brenners erfolgt sind.

Das Beaufschlagen der hier betrachteten Wandflussfiltersubstrate mit dem trockenen Pulver-Gas-Aerosol führt dazu, dass sich die Pulverteilchen dem Strom des Gases folgend in den Poren des Wandflussfiltersubstrates und gegebenenfalls auf den Oberflächen $O_\varepsilon$ abscheiden. Dabei führt die unterschiedliche Wandpermeabilität des Wandflussfiltersubstrates (z.B. bedingt durch Inhomogenitäten der Filterwand selbst oder unterschiedliche Beschichtungszonen) zu einer selektiven Abscheidung des Pulvers in den Poren der Wand oder auf den Oberflächen $O_E$ dort, wo die Strömung am größten ist. Dieser Effekt führt auch dazu, dass zum Beispiel Risse oder Poren in der Washcoatschicht aufgrund von Beschichtungsfehlern durch das poröse Pulver so aufgefüllt werden, dass späterhin die Rußpartikel im Abgas beim Durchgang des Abgases durch den Filter vermehrt zurückgehalten werden. Eine bessere Filtrationseffizienz ist mithin die Folge.

Erfindungsgemäß wird demnach das mit Beschichtung Z und gegebenenfalls Beschichtung Y beschichtete, trockene Wandflussfiltersubstrat ausgehend von seinem ersten und in Richtung seines zweiten Endes (d.h. in Bezug auf den bestimmungsgemäßen Gebrauch in Abgasströmungsrichtung) mit einem Pulver derart belegt, dass die am stärksten durchströmten Zellwandbereiche mit lockeren in sich porösen Pulveranhäufungen in den porösen Wänden und/oder auch auf den Oberflächen $O_E$ belegt werden um eine gewünschte erhöhte Filtrationseffizienz zu erhalten. Dabei führt die Bildung der in sich porösen Pulveranhäufungen überraschenderweise zu einer relativ niedrigen Staudruckerhöhung. In einer bevorzugten Ausführungsform wird das Wandflussfiltersubstrat so mit einem Pulver-Gas-Aerosol beaufschlagt, dass sich das Pulver bei der Beaufschlagung in den Poren der porösen Wand und auf den Oberflächen $O_E$ abscheidet und hier eine zusammenhängende Schicht aufbaut. In einer weiterhin ganz bevorzugten Ausführungsform wird der Wandflussfilter so mit einem Pulver-Gas-Aerosol beaufschlagt, dass sich das Pulver bei der Beaufschlagung in den Poren der Filterwände niederschlägt und diese bis zu den Oberflächen $O_E$ auffüllt und dabei keine zusammenhängende Schicht auf Oberflächen $O_E$ ausbildet.

Damit das Pulver des Pulver-Gas-Aerosols sich ausreichend gut in den Poren des mit Beschichtung Z und gegebenenfalls Beschichtung Y beschichteten Wandflussfiltersubstrates abscheiden kann bzw. auf den Oberflächen $O_E$ haften kann, sollte der Partikeldurchmesser im Aerosol zumindest kleiner sein als die Poren des Wandflussfiltersubstrats. Dies kann ausgedrückt werden dadurch, dass das Verhältnis von mittlerem Partikeldurchmesser ($Q_3$-Verteilung; gemessen gemäß neuester ISO 13320 am Anmeldetag) dso im trockenen Aerosol und dem mittleren Porendurchmesser des Wandflussfilters nach Beschichtung (gemessen nach DIN 66134 - neueste Fassung am Anmeldetag) bei 0,03 bis 2, vorzugsweise bei 0,05 bis 1,43 und ganz besonders bevorzugt bei 0,05 bis 0,63 liegt. Hierdurch wird erreicht, dass sich die Partikel des Pulvers im Aerosol dem Gasstrom folgend in den Poren der Wände des Wandflussfiltersubstrates niederschlagen können.

Ein geeignetes Pulver hat insbesondere eine spezifische Oberfläche von mindestens 100 m$^2$/g und ein totales Porenvolumen von mindestens 0,3 ml/g.

Für ein geeignetes Pulver zur Herstellung der erfindungsgemäßen Wandflussfilter ist eine Optimierung zwischen möglichst großer Oberfläche der verwendeten Pulver, der Vernetzung und der Haftfestigkeit von Vorteil. Während des Betriebs im Fahrzeug folgen kleine Partikel aufgrund ihrer niedrigen Partikelrelaxationszeit annähernd trägheitslos den Stromlinien. Dieser gleichmäßigen, konvektionsgetriebenen Bewegung wird eine zufällige "Zitterbewegung" überlagert. Dieser Theorie folgend ergibt sich für eine gute Filtrationswirkung eines mit Pulver beaufschlagten Wandflussfilters, dass dieses eine möglichst große umströmte Oberflächen anbieten sollte. Das Pulver sollte somit einen hohen Feinanteil aufweisen, da bei gleichem Gesamtvolumen des mineralischen Materials kleine Partikel deutlich größere Oberflächen anbieten. Gleichzeitig darf der Druckverlust aber nur unwesentlich steigen. Dies erfordert eine lockere Vernetzung der Pulver. Für eine filtrationseffizienzsteigernde Beschichtung können vorzugsweise Pulver mit einer Stampfdichte zwischen 50 g/l und 900 g/l verwendet werden, vorzugsweise zwischen 200 g/l und 850 g/l und ganz bevorzugt zwischen 400 g/l und 800 g/l.

Das Aerosol aus dem Gas und dem Pulver kann nach Maßgabe des Fachmannes oder wie weiter unten dargestellt hergestellt werden. Hierzu wird gemeinhin ein Pulver mit einem Gas vermischt (http://www.tsi.com/Aerosol generatoren-und-dispergierer/; https://www.palas.de/de/product/aerosolgeneratorssolidparticles). Dieses so hergestellte Gemisch aus dem Gas und dem Pulver wird dann in vorteilhafter Weise über einen Gasstrom in die Kanäle E des Wandflussfiltersubstrates geführt.

Als Gase zur Herstellung des Aerosols und zum Eintragen in das Wandflussfiltersubstrat können alle dem Fachmann für den vorliegenden Zweck infrage kommende Gase herangezogen werden. Ganz besonders bevorzugt ist der Einsatz von Luft. Es können jedoch auch andere Reaktionsgase herangezogen werden, die entweder eine oxidierende (z.B. $O_2$, $NO_2$) oder eine reduzierende (z.B. $H_2$) Aktivität gegenüber dem eingesetzten Pulver entwickeln können. Ebenfalls kann sich bei bestimmten Pulvern der Einsatz von Inertgasen (z.B. $N_2$) oder Edelgasen (z.B. He) als vorteilhaft erweisen. Auch Mischungen der aufgezählten Gase sind vorstellbar.

Um das Pulver ausreichend tief in die Kanäle E und gut haftend abscheiden zu können, ist eine gewisse Saugleistung von Nöten. Der Fachmann kann sich hier in orientierenden Versuchen für den jeweiligen Wandflussfilter und das jeweilige Pulver selbst ein Bild machen. Es hat sich herausgestellt, dass das Aerosol (Pulver-Gas-Gemisch) vorzugsweise mit einer Geschwindigkeit von 5 m/s bis 60 m/s, mehr bevorzugt 10 m/s bis 50 m/s und ganz besonders bevorzugt 15 m/s bis 40 m/s durch den Wandflussfilter gesaugt wird. Hierdurch wird ebenfalls eine vorteilhafte Adhäsion des applizierten Pulvers erreicht.

Die Dispergierung des Pulvers in dem Gas zur Etablierung eines Pulver-Gas-Aerosols erfolgt dabei auf verschiedene Arten. Vorzugsweise wird die Dispergierung des Pulvers durch mindestens eine oder eine Kombination der folgenden Maßnahmen generiert: Druckluft, Ultraschal, Sieben, "in-situ-Mahlen", Gebläse, Expansion von Gasen, Wirbelbett. Weitere, hier nicht genannte Dispergiermethoden können vom Fachmann ebenfalls herangezogen werden. Im Prinzip ist der Fachmann frei darin, eine Methode zur Herstellung des Pulver-Gas-Aerosols zu wählen. Wie eben beschrieben wird das Pulver zuerst durch eine Dispergierung in ein Pulver-Gas-Aerosol umgewandelt und anschließend in einen Gasstrom geleitet.

Dieses so hergestellte Gemisch aus dem Gas und dem Pulver wird erst anschließend in einen bestehenden Gasstrom eingeleitet, welcher das fein verteilte Pulver in die Kanäle E des Wandflussfiltersubstrates trägt. Dieser Prozess wird bevorzugt durch eine Saugvorrichtung, welche in der vom Filter abströmseitig befindlichen Rohrleitung positioniert ist, unterstützt. Dies steht im Gegensatz zur in der Fig. 3 der US8277880B gezeigten Vorrichtung, bei der das Pulver-Gas-Aerosol direkt im Gasstrom erzeugt wird. Das erfindungsgemäße Verfahren erlaubt eine viel gleichmäßigere und gute Durchmischung des Gasstroms mit dem Pulver-Gas-Aerosol, was letztlich für eine vorteilhafte Verteilung der Pulverteilchen im Filter in radialer wie axialer Richtung sorgt und damit die Abscheidung der Pulverteilchen auf dem Filter vereinheitlichen und steuern hilft. Das Pulver ist bei der Beaufschlagung des Wandflussfiltersubstrats im Sinne der Erfindung trocken. Vorzugsweise wird das Pulver mit Umgebungsluft vermischt auf den Filter aufgebracht. Durch die Vermischung des Pulver-Gas-Aerosols mit partikelfreiem Gas, vorzugsweise trockene Umgebungsluft, wird die Konzentration der Partikel auf ein solches Maß herabgesetzt, dass bis zur Abscheidung im Wandflussfiltersubstrat keine nennenswerte Agglomeration stattfindet. Dadurch wird die bei der Dispergierung eingestellte Partikelgröße im Aerosol konserviert.

Eine bevorzugte Vorrichtung zur Herstellung eines erfindungsgemäßen Wandflussfilters ist in Figur 11 schematisch dargestellt. Eine derartige Vorrichtung zeichnet sich dadurch aus, dass

- mindestens eine Einheit zur Dispergierung von Pulver in einem Gas;
- eine Einheit zur Vermischung der Dispersion mit einem bestehenden Gasstrom;
- zumindest zwei Einheiten zur Aufnahme eines Filters, die dergestalt ausgebildet sind, dass der Gasstrom durch den Filter fließt, ohne dass eine weitere Zufuhr eines Gases erfolgt;
- eine Einheit zur Erzeugung eines Soges, welche den Gasstrom durch den Filter aufrechterhält;
- optional eine Einheit zur Erzeugung von Wirbeln vor dem Filter, so dass eine Ablagerung von Pulver auf den Eingangsstopfen des Filters möglichst unterbleibt;
- und optional eine Einheit, durch die zumindest ein Teilgasstrom abströmseitig von der Saugvorrichtung entnommen wird und vor der Pulverzugabe dem Gasstrom, welcher durch den Filter gesaugt wird, zugegeben wird;

vorhanden sind.

In dieser bevorzugten Ausführungsform des erfindungsgemäßen Verfahrens - wie in der Skizze Figur 11 - dargestellt wird zumindest ein Teilgasstrom abströmseitig von der Saugvorrichtung entnommen und vor der Pulverzugabe dem Gasstrom, welcher durch den Filter gesaugt wird, wieder zugegeben. Dadurch wird das Pulver in einen schon erwärmten Luftstrom zudosiert. Die Sauggebläse für die nötigen Drücke erzeugen ca. 70°C Ablufttemperatur, da die installierte Saugleistung bevorzugt >20KW ist. Energetisch optimiert wird die Abwärme des Sauggebläses zum Aufheizen der Zuluft genutzt, um die relative Feuchte der Zuluft zu vermindern. Dies wiederum reduziert die Haftung der Partikel untereinander und an den Eingangsstopfen. Der Ablagerungsprozess des Pulvers kann damit besser gesteuert werden.

In dem vorliegenden Verfahren zur Herstellung eines erfindungsgemäßen Wandflussfilters wird ein Gasstrom mit einem Pulver-Gas-Aerosol beaufschlagt und dieser in ein Wandflussfiltersubstrat eingesaugt. Dadurch wird erreicht, dass das Pulver sich in dem Gasstrom ausreichend gut verteilen kann, um in die Kanäle E eindringen zu können. Die homogene Verteilung des Pulvers in dem Gas/der Luft erfordert eine intensive Durchmischung. Dafür sind dem Fachmann beispielsweise Diffusoren, Venturimischer und statische Mischer bekannt. Besonders geeignet für den Pulverbeschichtungsprozess sind Mischeinrichtungen, die Pulverablagerungen auf den Oberflächen der Beschichtungsanlage vermeiden. Damit kommen für diesen Prozess Diffusoren und Venturirohre bevorzugt zum Einsatz. Bewährt hat sich auch der Eintrag des dispergierten Pulvers in eine schnelldrehende rotierende Strömung mit einer hohen Turbulenz.

Zur Erreichung einer vorteilhaften gleichmäßigen Verteilung des Pulvers über den Querschnitt des Wandflussfiltersubstrats sollte das das Pulver transportierende Gas eine Kolbenströmung (möglichst gleiche Geschwindigkeit über den Querschnitt) beim Auftreffen auf den Filter aufweisen. Dies wird bevorzugt durch eine beschleunigte Strömung vor dem Filter eingestellt. Wie dem Fachmann bekannt ist, bewirkt eine stetige Verkleinerung des Querschnitts ohne abrupte Veränderungen eine solche beschleunigte Strömung, beschrieben durch die Kontinuitätsgleichung. Des Weiteren ist dem Fachmann dann auch bekannt, dass sich damit das Strömungsprofil stärker einem Kolbenprofil annähert. Zur gezielten Veränderung der Strömung können Einbauten wie z.B. Siebe, Ringe, Scheiben, etc. unterhalb und/oder oberhalb des Filters eingesetzt werden.

In einer weiteren vorteilhaften Ausgestaltung des vorliegenden Verfahrens besitzt die Apparatur zur Pulverbeschichtung eine oder mehrere Vorrichtungen (Turbulatoren, Vortexgeneratoren), mit denen der das Pulver-Gas-Aerosol

EP 4 015 065 B1

tragende Gasstrom vor dem Auftreffen auf den Filter verwirbelt werden kann. Als Beispiel hierfür können entsprechende Siebe oder Gitter dienen, die in einer ausreichenden Entfernung anströmseitig zum Wandflussfiltersubstrat platziert werden. Die Entfernung sollte nicht zu groß oder klein sein, so dass eine ausreichende Verwirbelung des Gasstroms direkt vor dem Wandflussfiltersubstrat erreicht wird. Der Fachmann kann die Entfernung in einfachen Versuchen ermitteln. Der Vorteil dieser Maßnahme liegt darin begründet, dass sich keine Pulverbestandteile auf den Stopfen der Kanäle A abscheiden und alles Pulver in die Kanäle E eindringen kann. Demzufolge ist erfindungsgemäß bevorzugt, wenn das Pulver vor dem Einströmen in den Filter dergestalt verwirbelt wird, dass Ablagerungen von Pulver auf den Stopfen des Wandflussfiltersubstrats möglichst vermieden werden. Ein Turbulator oder Turbulenz- oder Vortexgenerator bezeichnet in der Aerodynamik Gerätschaften, die eine künstliche Störung der Strömung verursachen. Wie dem Fachmann bekannt, bilden sich hinter Stäben, Gittern und anderen die Strömung störenden Einbauten bei entsprechenden Re-Zahlen Wirbel (insbesondere Mikrowirbel). Bekannt ist die Karmansche Wirbelstraße (H. Benard, C. R. Acad. Sci. Paris Ser. IV 147, 839 (1908); 147, 970 (1908); T. von Karman, Nachr. Ges. Wiss. Göttingen, Math. Phys. Kl. 509 (1911); 547 (1912)) und die Wirbelschleppe hinter Flugzeugen, die Dächer abdecken kann. Dieser Effekt kann in dem erfindungsgemäßen Fall ganz besonders vorteilhaft durch vibrierende selbstreinigende Siebe (sogenannte Ultraschallsiebe), die sich vorteilhafterweise in der Strömung bewegen, noch verstärkt werden. Eine andere Methode ist die Störung der Strömung durch Schallfelder, die durch die Druckamplituden die Strömung zu Turbulenzen anregt. Diese Schallfelder können sogar die Oberfläche des Filters ohne Strömung reinigen. Die Frequenzen können von Ultraschall bis zum Infraschall reichen. Letztere Maßnahmen werden auch zur Rohreinigung in großtechnischen Anlagen eingesetzt.

Die bevorzugten Ausführungsformen für den Wandflussfilter gelten mutatis mutandis auch für das Verfahren. Es wird diesbezüglich explizit auf das oben zum Wandflussfilter Gesagte verwiesen.

Trocken im Sinne der vorliegenden Erfindung bedeutet den Ausschluss der Anwendung einer Flüssigkeit, insbesondere von Wasser. Insbesondere die Herstellung einer Suspension des Pulvers in einer Flüssigkeit zur Verdüsung in einen Gasstrom sollte vermieden werden. Sowohl für den Filter als auch für das Pulver kann eine gewisse Feuchte ggf. tolerierbar sein, sofern das Erreichen des Ziels - die möglichst fein verteilte Abscheidung des Pulvers in den porösen Wänden und/oder den Oberflächen $O_\epsilon$ des Wandflussfiltersubstrates - nicht negativ beeinflusst wird. In der Regel ist das Pulver rieselfähig und durch Energieeintrag dispergierbar. Die Feuchtigkeit des Pulvers bzw. des Wandflussfiltersubstrats im Zeitpunkt der Beaufschlagung mit dem Pulver sollte weniger als 20 %, bevorzugt weniger als 10 % und ganz besonders bevorzugt weniger als 5 % (gemessen bei 20°C und Normaldruck ISO 11465 neueste Fassung am Anmeldetag) betragen.

Der erfindungsgemäße Wandflussfilter zeigt eine hervorragende Filtrationseffizienz bei nur moderatem Anstieg des Abgasgegendrucks verglichen mit einem nicht mit Pulver beaufschlagten Wandflussfilter im frischen Zustand. Bevorzugt zeigt der erfindungsgemäße Wandflussfilter eine Verbesserung der Rußpartikelabscheidung (Filterwirkung) im Filter von mindestens 5 %, vorzugsweise mindestens 10 % und ganz besonders bevorzugt mindestens 20 % bei einer relativen Erhöhung des Abgasgegendrucks des frischen Wandflussfilters von höchstens 40%, vorzugsweise von höchsten 20% und ganz besonders bevorzugt höchstens 10% verglichen mit einem nicht mit Pulver behandelten, frischen mit katalytisch aktivem Material beschichteten Filter. Die geringe Staudruckerhöhung ist wahrscheinlich darauf zurückzuführen, dass durch die erfindungsgemäße Beaufschlagung des Filters mit einem Pulver der Querschnitt der Kanäle auf der Eingangsseite nicht stark verringert wird. Es wird angenommen, dass das Pulver in sich eine poröse Struktur bildet, was sich positiv auf den Staudruck auswirkt. Daher sollte ein erfindungsgemäßer Wandflussfilter gegenüber denen des Standes der Technik, bei denen ein Pulver auf den Wänden der Einlassseite eines Filters abgeschieden oder eine klassische nasstechnische Beschichtung gewählt wurde, ebenfalls einen besseren Abgasgegendruck zeigen.

Beschichtung Z verleiht dem erfindungsgemäßen Wandflussfilter eine hervorragende Dreiwege-Aktivität, während die optionale Beschichtung Y die Rußzündtemperatur herabzusetzen vermag und somit den Rußabbrand erleichtert.

Ebenfalls Gegenstand der vorliegenden Erfindung ist somit die Verwendung eines erfindungsgemäßen Wandflussfilters zur Minderung schädlicher Abgase eines Verbrennungsmotors. Bevorzugt ist die Verwendung des erfindungsgemäßen Wandflussfilters zur Behandlung von Abgasen eines stöchiometrisch betriebenen Verbrennungsmotors, also insbesondere eines mit Benzin betriebenen Verbrennungsmotors.

Ganz vorteilhaft wird der erfindungsgemäße Wandflussfilter in Kombination mit mindestens einem Dreiwegkatalysatoreingesetzt. Insbesondere ist es vorteilhaft wenn sich ein Dreiwegekatalysator in motornaher Position anströmseitig des erfindungsgemäßen Wandflussfilters befindet. Ebenso ist es vorteilhaft wenn sich ein Dreiwegekatalysator abströmseitig des erfindungsgemäßen Wandflussfilters befindet. Ebenso ist es vorteilhaft, wenn sich jeweils ein Dreiwegekatalysator anströmseitig und abströmseitig des Wandflussfilters befindet.

Die für den erfindungsgemäßen Wandflussfilter beschriebenen bevorzugten Ausführungsformen gelten mutatis mutandis auch für die hier erwähnte Verwendung.

Die für den erfindungsgemäßen Wandflussfilter beschriebenen bevorzugten Ausführungsformen gelten mutatis mutandis auch für die hier erwähnte Verwendung.

Die vorliegende Erfindung betrifft des Weiteren ein Abgasreinigungssystem, das einen erfindungsgemäßen Filter und mindestens einen weiteren Katalysator umfasst. In einer Ausführungsform dieses Systems ist mindestens ein weiterer Katalysator stromaufwärts des erfindungsgemäßen Filters angeordnet. Bevorzugt handelt es sich hierbei um einen Dreiwegekatalysator oder einen Oxidationskatalysator oder einen $NO_x$-Spei-cherkatalysator. In einer weiteren Ausführungsform dieses Systems ist mindestens ein weiterer Katalysator stromabwärts des erfindungsgemäßen Filters angeordnet. Bevorzugt handelt es sich hierbei um einen Dreiwegekatalysator oder einen SCR Katalysator oder einen $NO_x$-Speicherkatalysator oder um einen Ammoniakschlupfkatalysator. In einer weiteren Ausführungsform dieses Systems ist mindestens ein weiterer Katalysator stromaufwärts des erfindungsgemäßen Filters und mindestens ein weiterer Katalysator stromabwärts des erfindungsgemäßen Filters angeordnet. Bevorzugt handelt es sich bei den stromaufwärts angeordneten Katalysator um einen Dreiwegekatalysator oder einen Oxidationskatalysator oder einen $NO_x$-Speicher-katalysator und bei dem stromabwärts angeordneten Katalysator um einen Dreiwegekatalysator oder einen SCR Katalysator oder einen $NO_x$-Speicherkatalysator oder um einen Ammoniakschlupfkatalysator. Die für den erfindungsgemäßen Wandflussfilter beschriebenen bevorzugten Ausführungsformen gelten mutatis mutandis auch für das hier erwähnte Abgasreinigungssystem.

Üblicherweise findet der erfindungsgemäße Filter vor allem bei Verbrennungsmotoren, insbesondere bei Verbrennungsmotoren mit Direkteinspritzung oder Saugrohreinspritzung Anwendung. Bevorzugt handelt es sich hierbei um stöchiometrisch betriebene Benzin- oder Erdgasmotoren. Bevorzugt handelt es sich um Motoren mit Turboaufladung.

Die Anforderungen an Benzinpartikelfilter (GPF) unterscheiden sich deutlich von den Anforderungen an Dieselpartikelfilter (DPF). Dieselmotoren ohne DPF können bis zu zehnfach höhere Partikelemissionen, bezogen auf die Partikelmasse, aufweisen als Benzinmotoren ohne GPF (Maricq et al., SAE 1999-01-01530). Außerdem fallen beim Benzinmotor deutlich weniger Primärpartikel an und die Sekundärpartikel (Agglomerate) sind deutlich kleiner als beim Dieselmotor. Die Emissionen bei Benzinmotoren liegen im Bereich von Partikelgrößen kleiner 200 nm (Hall et al., SAE 1999-01-3530) bis 400 nm (Mathis et al., Atmospheric Environment 38 4347) mit dem Maximum im Bereich von rund 60 nm bis 80 nm. Daher muss die Filtration der Nanopartikel beim GPF hauptsächlich über Diffusionsabscheidung erfolgen. Für Partikel kleiner als 300 nm wird mit abnehmender Größe die Abscheidung durch Diffusion (Brownsche Molekularbewegung) und elektrostatische Kräfte immer bedeutender (Hinds, W.: Aerosol technology: Properties and behavior and measurement of airborne particles. Wiley, 2. Auflage 1999).

Die Figuren 1 bis 10 zeigen die bereits oben genauer beschriebenen unterschiedlichen Beschichtungsanordnungen erfindungsgemäßer Wandflussfilter. Darin bezeichnet

(E) den Eingangskanal/ Anströmkanal des Wandflussfilters
(A) den Ausgangskanal/ Abströmkanal des Wandflussfilters
($O_E$) die von den Eingangskanälen (E) gebildeten Oberflächen
($O_A$) die von den Ausgangskanälen (A) gebildeten Oberflächen
(L) die Länge der Filterwand
(Z) die Beschichtung Z
(Y) die Beschichtung Y
(F) die Beschichtung F

Figur 11 zeigt eine schematische Zeichnung einer vorteilhaften Vorrichtung zur Beaufschlagung der Filter mit einem Pulver. Das Pulver 420 oder 421 wird mit dem Gas unter Druck 451 durch die Zerstäuberdüse 440 in der Mischkammer mit dem Gasstrom 454 gemischt und dann durch den Filter 430 gesaugt bzw. gedrückt. Die durchgeschlagenen Partikel werden in dem Abgasfilter 400 herausgefiltert. Das Gebläse 410 sorgt für den nötigen Volumenstrom. Das Abgas wird aufgeteilt in ein Abgas 452 und ein warmes Kreislaufgas 453. Das warme Kreislaufgas 453 wird mit der Frischgas 450 gemischt.

Die Vorzüge der Erfindung werden im Folgenden durch Referenzbeispiele erläutert. Vergleichsbeispiel 1: Nur Beschichtung Z:
Mit Lanthanoxid stabilisiertes Aluminiumoxid wurde zusammen mit einer ersten Sauerstoffspeicherkomponente, die 40 Gew.-% Ceroxid, Zirkonoxid, Lanthanoxid und Praseodymoxid umfasste, und einer zweiten Sauerstoffspeicherkomponente, die 24 Gew.-% Ceroxid, Zirkonoxid, Lanthanoxid und Yttriumoxid umfasste, in Wasser suspendiert. Beide Sauerstoffspeicherkomponenten wurden zu gleichen Teilen eingesetzt. Das Gewichtsverhältnis von Aluminiumoxid und Sauerstoffspeicherkomponente betrug 30:70. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung eines handelsüblichen Wandflussfiltersubstrats eingesetzt, wobei die Beschichtung Z über 100% der Substratlänge in die poröse Filterwand eingebracht wurde. Die Gesamtbeladung dieses Filters betrug 75 g/l, die Gesamtedelmetallbeladung 2,12 g/l mit einem Verhältnis von Palladium zu Rhodium von 5 : 1. Der so erhaltene beschichtete Filter wurde getrocknet und anschließend kalziniert. Er wird nachstehend als VGPF1 bezeichnet.

Referenzbeispiel 1: Beschichtung Z in Kombination mit Beschichtung F: Mit Lanthanoxid stabilisiertes Aluminiumoxid wurde zusammen mit einer ersten Sauerstoffspeicherkomponente, die 40 Gew.-% Ceroxid, Zirkonoxid, Lanthanoxid und Praseodymoxid umfasste, und einer zweiten Sauerstoffspeicher-komponente, die 24 Gew.-% Ceroxid, Zirkonoxid, Lanthanoxid und Yttriumoxid umfasste, in Wasser suspendiert.

Beide Sauerstoffspeicherkomponenten wurden zu gleichen Teilen eingesetzt. Das Gewichtsverhältnis von Aluminiumoxid und Sauerstoffspeicherkomponente betrug 30:70. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung eines handelsüblichen Wandflussfiltersubstrats eingesetzt, wobei die Beschichtung Z über 100% der Substratlänge in die poröse Filterwand eingebracht wurde. Die Gesamtbeladung dieses Filters betrug 75 g/l, die Gesamtedelmetallbeladung 2,12 g/l mit einem Verhältnis von Palladium zu Rhodium von 5 : 1. Der so erhaltene beschichtete Filter wurde getrocknet und anschließend kalziniert. Anschließend wurde der Filter mit einem trockenen Pulver-Gas-Aerosol beaufschlagt wobei 4 g/L eines mineralischen Materials in die Kanäle E eingebracht wurden. Er wird nachstehend als GPF1 bezeichnet.

Die beiden so erhaltenen Filter wurden anschließend an einem Kaltblasprüfstand vermessen, um den Druckverlust über den jeweiligen Filter zu bestimmen. Bei Raumtemperatur und einem Volumenstrom von 600 m$^3$/h Luft ergibt sich ein Gegendruck des VGPF1 von 29 mbar und des GPF1 von 39 mbar. Wie bereits beschrieben führt die Filtrationsbeschichtung F lediglich zu einem moderaten Gegendruckanstieg.

Des Weiteren wurden die beiden Filter bezüglich des Gegendrucks nach Rußbeladung untersucht. Hierzu wurden beide Filter an einem Motorprüfstand mit einem Direkteinspritzenden Turboaufgeladenen Motor berußt. Die finale Rußbeladung betrug ca. 3 g. Unter diesen Rahmenbedingungen ergibt sich ein Rußgegendruck des VGPF1 von 73 mbar und des GPF1 von lediglich 44 mbar.

Parallel dazu wurden frische Filter VGPF1 und GPF1 im Fahrzeug bezüglich ihrer Partikelfiltrationseffizienz untersucht. Hierzu wurden die Filter in einem RTS-95, auch bekannt als RTC-aggressive, Fahrzyklus in motornaher Position zwischen zwei Partikelzählern vermessen. In beiden Fällen befand sich ein Dreiwegekatalysator stromaufwärts im Abgastrakt über den die Lambdaregelung des Fahrzeugs erfolgte. Hierbei weist der erfindungsgemäße Filter GPF1 eine, aus den Partikelwerten der beiden Partikelzählern berechnete Filtrationseffizienz von 96 % auf, während der Vergleichsfilter VGPF1 lediglich eine Filtrationseffizienz von 42 % erzielt. In Summe ist ersichtlich, dass die Kombination aus Filtrationsbeschichtung F und der Dreiwegebeschichtung Z besonders vorteilhaft bezüglich des Gegendrucks nach Rußbeladung und der Filtrationseffizienz ist.

**Patentansprüche**

1. Wandflussfilter zur Entfernung von Partikeln aus dem Abgas von Verbrennungsmotoren, das ein Wandflussfiltersubstrat der Länge L und voneinander verschiedene Beschichtungen Z und F umfasst,

   wobei das Wandflussfiltersubstrat Kanäle E und A aufweist, die sich parallel zwischen einem ersten und einem zweiten Ende des Wandflussfiltersubstrats erstrecken, durch poröse Wände getrennt sind und Oberflächen $O_E$ bzw. $O_A$ bilden und wobei die Kanäle E am zweiten Ende und die Kanäle A am ersten Ende verschlossen sind und wobei sich die Beschichtung Z in den porösen Wänden und/oder auf den Oberflächen $O_A$, nicht aber auf den Oberflächen $O_E$ befindet, und Palladium und/oder Rhodium und ein Cer/Zirkonium-Mischoxid umfasst, **dadurch gekennzeichnet, dass** sich die Beschichtung F in den porösen Wänden und/ oder auf den Oberflächen $O_E$, nicht aber auf den Oberflächen $O_A$ befindet und ein mineralisches Material und kein Edelmetall umfasst, wobei das mineralische Material ein Phyllosilikat wie Kaolin, Sepiolith, Montmorillonit bzw. Bentonit, Muskovit, Vermiculit ist.

2. Wandflussfilter gemäß Anspruch 1, **dadurch gekennzeichnet, dass** sich Beschichtung Z auf den Oberflächen $O_A$ des Wandflussfiltersubstrates befindet und sich ausgehend vom zweiten Ende des Wandflussfiltersubstrates auf 50 bis 90 % der Länge L erstreckt.

3. Wandflussfilter gemäß Anspruch 1, **dadurch gekennzeichnet, dass** sich Beschichtung Z in den porösen Wänden des Wandflussfiltersubstrates befindet und sich ausgehend vom ersten Ende des Wandflussfiltersubstrates auf 50 bis 100 % der Länge L erstreckt.

4. Wandflussfilter gemäß einem oder mehreren der Ansprüche 1 bis 3, **dadurch gekennzeichnet, dass** Beschichtung Z Palladium und Rhodium und kein Platin enthält.

5. Wandflussfilter gemäß einem oder mehreren der Ansprüche 1 bis 4, **dadurch gekennzeichnet, dass** das Cer/Zirkonium-Mischoxid der Beschichtung Z ein oder mehrerer Seltenerdmetalloxide enthält.

6.  Wandflussfilter gemäß Anspruch 5, **dadurch gekennzeichnet, dass** das Seltenerdmetalloxid Lanthanoxid, Yttriumoxid, Praseodymoxid, Neodymoxid und/oder Samariumoxid ist.

7.  Wandflussfilter gemäß einem oder mehreren der Ansprüche 1 bis 6, **dadurch gekennzeichnet, dass** Beschichtung Z Lanthan-stabilisiertes Aluminiumoxid, Rhodium, Palladium oder Palladium und Rhodium, sowie ein Cer/Zirkonium/Seltenerdmetall-Mischoxid, das Yttriumoxid und Lanthanoxid als Seltenerdmetalloxide enthält, umfasst.

8.  Wandflussfilter gemäß einem oder mehreren der Ansprüche 1 bis 6, **dadurch gekennzeichnet, dass** Beschichtung Z Lanthan-stabilisiertes Aluminiumoxid, Rhodium, Palladium oder Palladium und Rhodium, sowie ein Cer/Zirkonium/Seltenerdmetall-Mischoxid, das Praseodymoxid und Lanthanoxid als Seltenerdmetalloxide enthält, umfasst.

9.  Wandflussfilter gemäß einem oder mehreren der Ansprüche 1 bis 8, **dadurch gekennzeichnet, dass** er einen zunehmenden Konzentrationsgradienten der Beschichtung F in Längsrichtung des Filters von seinem ersten zum zweiten Ende aufweist.

10. Wandflussfilter gemäß einem oder mehreren der Ansprüche 1 bis 9, **dadurch gekennzeichnet, dass** das Wandflussfiltersubstrat, eine Beschichtung Y aufweist, die von den Beschichtungen Z und F verschieden ist, die Platin, Palladium oder Platin und Palladium umfasst, die kein Rhodium und kein Cer/Zirkonium-Mischoxid enthält und die sich in den porösen Wänden und/oder auf den Oberflächen $O_\varepsilon$, nicht aber auf den Oberflächen $O_A$ befindet.

11. Wandflussfilter gemäß Anspruch 10, **dadurch gekennzeichnet, dass** sich Beschichtung Y auf einer Länge von 50 bis 100% der Länge L erstreckt.

12. Verfahren zur Herstellung eines Wandflussfilters gemäß einem oder mehreren der Ansprüche 1 bis 11, **dadurch gekennzeichnet, dass** die Kanäle E des bereits mit Beschichtung Z und gegebenenfalls Beschichtung Y beschichteten trockenen Wandflussfiltersubstrats mit einem trockenen Pulver-Gas-Aerosol beaufschlagt wird, wobei das Pulver ein mineralisches Material enthält.

13. Verwendung eines Wandflussfilters gemäß einem oder mehreren der Ansprüche 1 bis 11 zur Minderung schädlicher Abgase eines Verbrennungsmotors.


**Claims**

1.  Wall-flow filter for removing particles from the exhaust gas of combustion engines, the filter comprising a wall-flow filter substrate of length L and coatings Z and F that differ from one another,

    the wall-flow filter substrate having channels E and A, which extend in parallel between a first and a second end of the wall-flow filter substrate, being separated by porous walls and forming surfaces $O_E$ and $O_A$, respectively, and the channels E being closed at the second end and the channels A being closed at the first end, and the coating Z being located in the porous walls and/or on the surfaces $O_A$, but not on the surfaces $O_E$, and comprising palladium and/or rhodium and a cerium/zirconium mixed oxide,
    **characterized in that** the coating F is located in the porous walls and/or on the surfaces $O_\varepsilon$, but not on the surfaces $O_A$, and comprises a mineral material and no precious metal, the mineral material being a phyllosilicate such as kaolin, sepiolite, montmorillonite or bentonite, muscovite, vermiculite.

2.  Wall-flow filter according to claim 1, **characterized in that** coating Z is located on the surfaces $O_A$ of the wall-flow filter substrate and extends from the second end of the wall-flow filter substrate to 50 to 90% of the length L.

3.  Wall-flow filter according to claim 1, **characterized in that** coating Z is located in the porous walls of the wall-flow filter substrate and extends from the first end of the wall-flow filter substrate to 50 to 100% of the length L.

4.  Wall-flow filter according to one or more of claims 1 to 3,
    **characterized in that** coating Z contains palladium and rhodium and no platinum.

5.  Wall-flow filter according to one or more of claims 1 to 4,
    **characterized in that** the cerium/zirconium mixed oxide of coating Z contains one or more rare earth metal oxides.

**6.** Wall-flow filter according to claim 5, **characterized in that** the rare earth metal oxide is lanthanum oxide, yttrium oxide, praseodymium oxide, neodymium oxide and/or samarium oxide.

**7.** Wall-flow filter according to one or more of claims 1 to 6, **characterized in that** coating Z comprises lanthanum-stabilized aluminum oxide, rhodium, palladium or palladium and rhodium, and a cerium/zirconium/rare earth metal mixed oxide containing yttrium oxide and lanthanum oxide as rare earth metal oxides.

**8.** Wall-flow filter according to one or more of claims 1 to 6, **characterized in that** coating Z comprises lanthanum-stabilized aluminum oxide, rhodium, palladium or palladium and rhodium, and a cerium/zirconium/rare earth metal mixed oxide containing praseodymium oxide and lanthanum oxide as rare earth metal oxides.

**9.** Wall-flow filter according to one or more of claims 1 to 8, **characterized in that** it has an increasing concentration gradient of the coating F in the longitudinal direction of the filter from the first to the second end thereof.

**10.** Wall-flow filter according to one or more of claims 1 to 9, **characterized in that** the wall-flow filter substrate has a coating Y which is different from the coatings Z and F, which comprises platinum, palladium or platinum and palladium, which contains no rhodium and no cerium/zirconium mixed oxide and which is located in the porous walls and/or on the surfaces $O_\varepsilon$, but not on the surfaces $O_A$.

**11.** Wall-flow filter according to claim 10, **characterized in that** coating Y extends over a length of 50 to 100% of the length L.

**12.** Method for producing a wall-flow filter according to one or more of claims 1 to 11, **characterized in that** the channels E of the dry wall-flow filter substrate already coated with coating Z and optionally coating Y are impinged on by a dry powder/gas aerosol, the powder containing a mineral material.

**13.** Use of a wall-flow filter according to one or more of claims 1 to 11 for reducing harmful exhaust gases of a combustion engine.

**Revendications**

**1.** Filtre à écoulement sur paroi permettant d'éliminer des particules des gaz d'échappement de moteurs à combustion interne, lequel filtre à écoulement sur paroi comprend un substrat de filtre à écoulement sur paroi de longueur L et des revêtements Z et F différents les uns des autres,

dans lequel le substrat de filtre à écoulement sur paroi présente des canaux E et A qui s'étendent parallèlement entre une première et une seconde extrémité du substrat de filtre à écoulement sur paroi et sont séparés par des parois poreuses et forment respectivement des surfaces $O_\varepsilon$ et $O_A$, et dans lequel les canaux E sont fermés au niveau de la seconde extrémité et les canaux A sont fermés au niveau de la première extrémité, et dans lequel le revêtement Z est situé dans les parois poreuses et/ou sur les surfaces $O_A$, mais pas sur les surfaces $O_\varepsilon$, et comprend du palladium et/ou du rhodium et un oxyde mixte de cérium/zirconium, **caractérisé en ce que** le revêtement F est situé dans les parois poreuses et/ou sur les surfaces $O_\varepsilon$, mais pas sur les surfaces $O_A$, et comprend un matériau minéral et aucun métal précieux, dans lequel le matériau minéral est un phyllosilicate tel que le kaolin, sépiolite, montmorillonite ou bentonite, muscovite, vermiculite.

**2.** Filtre à écoulement sur paroi selon la revendication 1, **caractérisé en ce que** le revêtement Z est situé sur les surfaces $O_A$ du substrat de filtre à écoulement sur paroi et s'étend sur 50 à 90 % de la longueur L à partir de la seconde extrémité du substrat de filtre à écoulement sur paroi.

**3.** Filtre à écoulement sur paroi selon la revendication 1, **caractérisé en ce que** le revêtement Z est situé dans les parois poreuses du substrat de filtre à écoulement sur paroi et s'étend sur 50 à 100 % de la longueur L à partir de la première extrémité du substrat de filtre à écoulement sur paroi.

**4.** Filtre à écoulement sur paroi selon l'une ou plusieurs des revendications 1 à 3, **caractérisé en ce que** le revêtement Z contient du palladium et du rhodium et aucun platine.

5. Filtre à écoulement sur paroi selon l'une ou plusieurs des revendications 1 à 4, **caractérisé en ce que** l'oxyde mixte de cérium/zirconium du revêtement Z contient un ou plusieurs oxydes métalliques de terres rares.

6. Filtre à écoulement sur paroi selon la revendication 5,
**caractérisé en ce que** l'oxyde métallique de terres rares est de l'oxyde de lanthane, oxyde d'yttrium, oxyde de praséodyme, oxyde de néodyme et/ou oxyde de samarium.

7. Filtre à écoulement sur paroi selon l'une ou plusieurs des revendications 1 à 6, **caractérisé en ce que** le revêtement Z comprend de l'oxyde d'aluminium stabilisé au lanthane, du rhodium, du palladium ou du palladium et du rhodium, ainsi qu'un oxyde mixte de cérium/zirconium/métallique de terres rares contenant de l'oxyde d'yttrium et de l'oxyde de lanthane comme oxydes métalliques de terres rares.

8. Filtre à écoulement sur paroi selon l'une ou plusieurs des revendications 1 à 6, **caractérisé en ce que** le revêtement Z comprend de l'oxyde d'aluminium stabilisé au lanthane, du rhodium, du palladium ou du palladium et du rhodium, ainsi qu'un oxyde mixte de cérium/zirconium/métallique de terres rares contenant de l'oxyde de praséodyme et de l'oxyde de lanthane comme oxydes métalliques de terres rares.

9. Filtre à écoulement sur paroi selon l'une ou plusieurs des revendications 1 à 8, **caractérisé en ce qu'**il présente, de sa première à sa seconde extrémité, un gradient de concentration croissant du revêtement F dans la direction longitudinale du filtre.

10. Filtre à écoulement sur paroi selon l'une ou plusieurs des revendications 1 à 9, **caractérisé en ce que** le substrat de filtre à écoulement sur paroi présente un revêtement Y qui est différent des revêtements Z et F et qui comprend du platine, du palladium ou du platine et du palladium, ne contient aucun rhodium ni oxyde mixte de cérium/zirconium et qui est situé dans les parois poreuses et/ou sur les surfaces $O_\varepsilon$, mais pas sur les surfaces $O_A$.

11. Filtre à écoulement sur paroi selon la revendication 10,
**caractérisé en ce que** le revêtement Y s'étend sur une longueur allant de 50 à 100 % de la longueur L.

12. Procédé de fabrication d'un filtre à écoulement sur paroi selon l'une ou plusieurs des revendications 1 à 11, **caractérisé en ce que** les canaux E du substrat de filtre à écoulement sur paroi sec déjà revêtu d'un revêtement Z et éventuellement d'un revêtement Y sont soumis à un aérosol poudre-gaz sec, dans lequel la poudre contient un matériau minéral.

13. Utilisation d'un filtre à écoulement sur paroi selon l'une ou plusieurs des revendications 1 à 11 pour la diminution des gaz d'échappement toxiques d'un moteur à combustion interne.

E

O$_E$

Beschichtung F

O$_A$

Beschichtung Z

A

Poröse Filterwand

L

Figur 1

E

O$_E$

Beschichtung F

O$_A$

Beschichtung Z

A

Poröse Filterwand

L

Figur 2

E

O$_E$

Beschichtung F

O$_A$

Beschichtung Z

A

Poröse Filterwand

L

Figur 3

Beschichtung F

Beschichtung Z

Poröse Filterwand

Figur 4

Beschichtung F

Beschichtung Y

Beschichtung Z

Poröse Filterwand

Figur 5

Beschichtung F

Beschichtung Y

Beschichtung Z

Poröse Filterwand

Figur 6

Beschichtung F

Beschichtung Y

Beschichtung Z

Poröse Filterwand

Figur 7

Beschichtung F

Beschichtung Y

Beschichtung Z

Poröse Filterwand

Figur 8

Beschichtung F

Beschichtung Y

Beschichtung Z

Poröse Filterwand

Figur 9

E

$O_E$

$O_A$

A

Beschichtung F

Beschichtung Y

Beschichtung Z

Poröse Filterwand

L

Figur 10

450

453

421

420

451

454

440

410

452

430

400

Figur 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1064094 B1
- EP 2521618 B1
- WO 10015573 A2
- EP 1136462 B1
- US 6478874 B1
- US 4609563 A
- WO 9947260 A1
- JP 5378659 B
- EP 2415522 A1
- JP 2014205108 A
- WO 2005016497 A1
- JP H01151706 B
- EP 1789190 B1
- WO 2011151711 A1
- WO 2012030534 A1
- US 8277880 B2
- EP 2502661 A2
- EP 2502662 B1
- US 8388721 B2
- EP 2727640 A1
- WO 2018115900 A1
- DE 102018127955 A1
- US 8277880 B

**In der Beschreibung aufgeführte Nicht-Patentliteratur**

- **M. STIEß**. Mechanische Verfahrenstechnik - Partikeltechnologie. Springer, 2009, vol. 1, 29
- **M. STIEß**. Mechanische Verfahrenstechnik - Partikeltechnologie. Springer, 2009, vol. 1, 35
- **M. STIEß**. Mechanische Verfahrenstechnik - Partikeltechnologie. Springer, 2009, vol. 1, 16
- **H. BENARD**. *C. R. Acad. Sci. Paris Ser. IV*, 1908, vol. 147, 839
- **H. BENARD**. *C. R. Acad. Sci. Paris Ser. IV*, 1908, vol. 147, 970
- **T. VON KARMAN**. *Nachr. Ges. Wiss. Göttingen, Math. Phys. Kl.*, 1911, 509
- **T. VON KARMAN**. *Nachr. Ges. Wiss. Göttingen, Math. Phys. Kl.*, 1912, 547
- **MARICQ et al.** *SAE 1999-01-01530*
- **HALL et al.** *SAE 1999-01-3530*
- **MATHIS et al.** *Atmospheric Environment*, vol. 38, 4347
- **HINDS, W.** Aerosol technology: Properties and behavior and measurement of airborne particles. Wiley, 1999